# EUROPÄISCHE PATENTSCHRIFT

(11) **EP 4 293 072 B1**
(45) Veröffentlichungstag und Bekanntmachung des Hinweises auf die Patenterteilung: **23.07.2025**
(21) Anmeldenummer: 23206851.0
(22) Anmeldetag: 15.01.2019
(51) Int. Cl.: B02C 17/00, C07B 35/06, C08J 11/04, C08J 11/00

(54) **MECHANOCHEMISCHES VERFAHREN ZUR HERSTELLUNG VON PERSISTENTEN ORGANISCHEN SCHADSTOFFEN UND ANDEREN ORGANOHALOGENVERBINDUNGEN FREIEN WERTPRODUKTEN AUS ABFÄLLEN VON KUNSTSTOFFEN UND KUNSTSTOFFLAMINATEN**
MECHANOCHEMICAL PROCESS FOR THE PRODUCTION VALUABLES FREE OF PERSISTENT ORGANIC POLLUTANTS AND OTHER ORGANOHALOGEN COMPOUNDS FROM WASTE OF PLASTICS AND PLASTIC LAMINATES
PROCÉDÉ MÉCANOCHIMIQUE POUR LA PRODUCTION DE PRODUITS DE VALEUR LIBRES DE POLLUANTS ORGANIQUES PERSISTANTS ET D'AUTRES COMPOSÉS ORGANOHALOGÉNÉS À PARTIR DE DÉCHETS DE MATIÈRES PLASTIQUES ET DE LAMINÉS PLASTIQUES

(30) Priorität: 20.01.2018 DE 102018000418
(43) Veröffentlichungstag der Anmeldung: 20.12.2023
(62) Teilanmeldung aus: 19701436.8
(73) Patentinhaber: Smart Material Printing B.V., 7532 XJ Enschede (NL)
(72) Erfinder: LUTHE, Gregor, 48599 Gronau (Westf.) (DE); BÜRKLE, Werner, 48683 Ahaus (DE)
(74) Vertreter: Meissner Bolte Düsseldorf Patentanwälte Rechtsanwälte Partnerschaft mbB

(56) Entgegenhaltungen:
- EP-A1- 0 963 825
- JP-A- 2000 248 110
- JP-B2- 3 305 993

## Beschreibung

Die vorliegende Erfindung betrifft ein mechanochemisches Verfahren zur Herstellung von von persistenten organischen Schadstoffen und anderen Organohalogenverbindungen freien Wertprodukten aus Abfällen von Kunststoffen und Kunststofflaminaten.

Außerdem betrifft die vorliegende Erfindung die mithilfe des mechanochemischen Verfahrens aus Abfällen von Kunststoffen und Kunststofflaminaten hergestellten, von persistenten organischen Schadstoffen und anderen Organohalogenverbindungen freien Wertprodukte.

Des Weiteren betrifft die vorliegende Erfindung von persistenten organischen Schadstoffen und anderen Organohalogenverbindungen freien Wertprodukten, herstellbar mithilfe des mechanochemischen Verfahrens.

Nicht zuletzt betrifft die vorliegende Erfindung die Verwendung der von persistenten organischen Schadstoffen und anderen Organohalogenverbindungen freien Wertprodukte.

### Stand der Technik

Die Handhabung und die Verwertung von Kunststoffabfällen bieten weltweit zahlreiche ökologische und ökonomische Probleme.

So verwertet die Abfallwirtschaft in Deutschland die gesammelten Kunststoffabfälle nahezu vollständig. Im Jahr 2015 hat sie 45% aller gesammelten Kunststoffabfälle werkstofflich und 1% rohstofflich verwertet. 53% der Abfälle wurden energetisch verwertet. Aus Klima- und Umweltschutzsicht ist es aber wichtig, mehr Kunststoffabfälle werkstofflich zu verwerten.

Die Kunststoffindustrie verarbeitet im Jahr 2015 rund 12,06 Millionen Tonnen (Mio. t) Kunststoffe, wie zum Beispiel Verpackungen. Der Kunststoffverbrauch in Deutschland lag nach Bereinigung um Im- und Exporte bei 10,1 Mio. t. Das sind 2,6 % beziehungsweise 4,6% mehr als im Jahr 2013. Im gleichen Zeitraum nahm die Menge der Kunststoffabfälle um 4,23% auf 5,92 Mio. t zu. Neben der Produktion von Kunststoffen zur Herstellung von Kunststoffwerkstoffen wurden auch rund 8,35 Mio. t Polymere für Klebstoffe, Lacke und Harze erzeugt. 73,9% der hergestellten Kunststoffe entfielen auf folgende fünf Thermoplaste: Polyethylen (PE) mit 2,8 Millionen Tonnen (Mio. t), Polypropylen (PP) mit 2,0 Mio. t, Polyvinylchlorid (PVC) mit 1,55 Mio. t, Polystyrol und expandiertes Polystyrol (PS/PS-E) mit 535.000 t sowie Polyamid (PA) mit 615.000 t. Etwa 15% der produzierten Gesamtmenge waren andere Thermoplaste wie Polycarbonat (PC), Polyethylenterephthalat (PET) oder Styrol-Copolymere wie AcrylnitrilButadien-Styrol (ABS) und Styrol-Acrylnitril (SAN). Die restlichen 11% waren sonstige Kunststoffe, u. a. Duroplaste wie Polyurethane, Polyester oder Formaldehydharze.

Im Jahr 2015 fielen in Deutschland knapp 5,92 Millionen Tonnen (Mio. t) Kunststoffabfälle an. Etwa 84,5%dieser Abfälle entstanden nach dem Gebrauch der Kunststoffe. Die restlichen 15,5% fielen bei der Herstellung und vor allem bei der Verarbeitung von Kunststoffen an. Von den 5,92 Millionen Tonnen (Mio. t) Kunststoffabfällen wurden 2,74 Mio. t, oder 46% werk- und rohstofflich genutzt. 3,14 Mio. t oder 53% wurden energetisch verwertet - 2,05 Mio. t davon in Müllverbrennungsanlagen.

Die Kunststoffabfälle aus dem privaten und gewerblichen Endverbrauch werden nur zu 33,5 % verwertet. Grund für diese unterschiedlichen Quoten ist, dass Kunststoffe in der Industrie meist sehr sauber und sortenrein anfallen, in Haushalten und bei vielen Gewerbebetrieben jedoch verschmutzt und vermischt. Aus Umweltschutzsicht ist es aber sinnvoll, vermehrt Altkunststoffe aus dem Restmüll "abzuschöpfen" und einer möglichst hochwertigen werkstofflichen Verwertung zuzuführen.

Weltweit sieht es weitaus schlechter aus: Plastikmüll in den Ozeanen ist ein weltweites Problem. Nach einer Anfang 2015 in der wissenschaftlichen Zeitschrift Science veröffentlichten Studie gelangten im Jahr 2010 etwa 8 Mio. t dieses Mülls in die Ozeane, wobei das Konfidenzintervall mit 4,8 bis 12,7 Mio. t pro Jahr angegeben wurde. Plastikteile, "primäres" Mikroplastik sowie die entsprechenden Zersetzungsprodukte sammeln sich insbesondere in einigen Meeresdriftströmungswirbeln an. In den Meeren treibender Plastikmüll wird durch Wellenbewegung und UV-Licht auf Dauer zerkleinert, wobei ein immer höherer Feinheitsgrad bis hin zur Pulverisierung erreicht werden kann. Bei einem hohen Feinheitsgrad wird das Plastikpulver von verschiedenen Meeresbewohnern sowie unter anderem auch von Plankton statt oder mit der üblichen Nahrung aufgenommen. Angefangen beim Plankton steigen die Mengen an Plastikpartikeln, an denen ggf. auch giftige und krebsverursachende Chemikalien wie DDT und Polychlorierte Biphenyle anhaften können, an. Auf diesem Weg gelangt der Plastikmüll mit den anlagernden Giftstoffen auch in die für den menschlichen Verzehr bestimmten Lebensmittel. Diverse Projekte und Forscher widmen sich dem Einsammeln des kleinteiligen Plastiks in den Meeren: Fishing for Litter, Anreize für Fischer der deutsche Green-Ocean e. V, The Ocean Cleanup, Müllsammelschiff Seekuh.

Die Kunststoffabfälle werden mithilfe unterschiedlicher Verfahren bearbeitet und/oder verarbeitet.

### Verwertung sortenreiner Abfälle:

Saubere, sortenreine Abfälle (meistens Produktionsabfälle aus der Industrie) werden - gegebenenfalls nach einer Reinigung mit Wasser - hauptsächlich mit üblichen Verfahren der Kunststoffverarbeitung aufbereitet. Zu diesen Verfahren gehören z. B. Extrusion, Spritzgieß- bzw. Spritzpressverfahren, Intrusion und Sinterpressverfahren. Für die Verarbeitung sauberer sortenreiner Kunststoffabfälle zu Rezyklaten werden konventionelle Ein- oder Doppelschneckenextruder verwendet. Um hierbei den hohen Qualitätsansprüchen zu genügen, kommt der Polymerreinheit eine große Bedeutung zu. Um möglichst alle Verunreinigungen zu erfassen, geschieht die Trennung im Schmelzstrom (Schmelzefiltration) zwischen Extruder und Extrusionswerkzeug.

### Verwertung nicht sortenreiner Kunststoffe:

Beim Sinterpressverfahren kann eine große Bandbreite von gemischten und verunreinigten Kunststoffabfällen eingesetzt werden. Als Produkte entstehen großflächige Platten mit bis zu 60 mm Dicke. Dabei lassen Verfärbungen und mechanische Mängel, die durch die Unverträglichkeit vieler Kunststoffe miteinander hervorgerufen werden, diese Produkte wenig attraktiv erscheinen

### Thermische Verfahren:

Thermische Verfahren wie Pyrolyse und Visbreaking sind bekannte Verfahren der Petrochemie. Altkunststoffe werden dort mit dem Ziel eingesetzt, die Kettenlänge von Polymeren so zu verkleinern, dass die Outputströme aus der Aufbereitung bei anderen chemischen oder energetischen Prozessen eingesetzt werden können. Darüber hinaus werden andere spezielle Verfahren, wie z. B. Entlackung von Kunststoffteilen, Trennung von Mehrschichtverbunden - dies nur für Produktionsabfälle - eingesetzt. Inwieweit solche Verfahren auch für demontierte Kunststoffbauteile (Post-consumer) wirtschaftlich betrieben werden können, ist derzeit offen. In Kraftwerken mit zirkulierender Wirbelschicht zur Mitverbrennung von Kunststoffabfällen verbleiben trotz allen Bemühungen immer noch Fraktionen übrig, deren werkstoffliche oder rohstoffliche Verwertung aus technischen, ökonomischen oder ökologischen Gründen nicht möglich oder nicht sinnvoll ist. Eine Deponierung solcher Stoffe ist seit dem Inkrafttreten der Abfallablagerungsverordnung am 1. Juni 2005 in Deutschland nicht mehr möglich, da nur noch inerte Produkte mit einem Glühverlust < 5 Gew.-% deponiert werden dürfen. Bei den thermischen Verfahren besteht indes immer die Gefahr, dass sich persistente organische Schadstoffe bilden.

### Rohstoffliche Verwertung:

Unter der rohstofflichen Verwertung versteht man eine Spaltung von Polymerketten durch die Einwirkung von Wärme zu petrochemischen Grundstoffen, wie Öle und Gase, die zur Herstellung neuer Kunststoffe oder andere Zwecke eingesetzt werden können. Wo werkstoffliche Verwertung nicht sinnvoll durchführbar ist, bietet die rohstoffliche Verwertung von Altkunststoffen eine weitere Möglichkeit der stofflichen Verwertung wie Vergasen, thermische Verwertung, Cracking und Hydrierung.

(Vgl. zur Problematik auch "Der Plastikstrom", Horizonte Kunststoffe, Technology Review, Juli 2017, Seiten 54 und 55)

Man hat auch versucht, mithilfe der speziellen physikalisch chemischen Effekte und Mechanismen, die die Mechanochemie bietet, den Problemen, die die Kunststoffabfälle bereiten, Herr zu werden.

Durch mechanische/physikalische Kräfte kommt es zu strukturellen Veränderungen der Oberfläche: Oberflächenvergrößerungen, Verringerung von Teilchengrößen, Entstehung frischer Oberflächen, Materialabrieb und teilweise auch Phasenumwandlungen. Auf mikroskopischer Ebene gibt es hochangeregte Gitterschwingungen, die thermisch nicht auftreten würden. Das ermöglicht zahlreiche exotische chemische Reaktionen.

Die speziellen physikalisch chemischen Effekte und Mechanismen sind Gegenstand zahlreicher theoretischer Untersuchungen wie zum Beispiel die Artikel von
- V. V. Boldyrev, Mechanochemistry and mechanical activation of solids, in Russian Chemical Reviews, 75 (3) 177-189 (2006);
- P. Yu. Butygain und A. N. Streletskii, The Kinetics and Energy Balance of Mechanochemical Transformations, in Physics of the Solid State, Vol. 47, No. 5, 2005, 856-852;
- J. Fontaine et al. Tribochemistry between hydrogen and diamond-like carbon films, in Surface Coatings Technology 146-147 (2001) 286-291;
- L. Takacs, Mechanochemistry and the Other Branches of Chemistry: Similarities and Differences, in Acta Physica Polonica A, Vol. 121 (2012), 3, 711-714;
- S. A. Steiner III et al., Circumventing the Mechanochemical Origins of Strength Loss in the Synthesis of Hierarchical Carbon Fibers, in Applied Materials & Intefaces, 2013, 4892-4903; oder
- MaterialsgateNewsletter 12.9.2017, Tribologie: Simulation zeigt auf molekularer Ebene bislang unbekannte Reibungsmechanismen.

Des Weiteren geben Review-Artikel einen Überblick über die geschichtliche Entwicklung und die Perspektiven der Mechanochemie wie etwa die Artikel von
- S. L. James et al., Mechanochemistry: opportunities for new and cleaner synthesis, in Chem. Soc. Rev., 2012, 41, 413-447, worin Synthesen anorganischer Materialien wie Legierungen, Oxide, Halogenide, Sulfide, Nitride und Komposite, Cokristalle wie Charge-Transfer-Cokristalle, Säure-Base-Cokristalle, ionische Cokristalle und die organische Katalyse durch Cokristallisation, neue Formen von Arzneimitteln wie pharmazeutische Cokristalle und organische Synthesen mit Kohlenstoff-Kohlenstoff- und Kohlenstoff-X-Bindungsbildung wie stöchiometrische organische Reaktionen, Metall katalysierte organische Reaktionen, organokatalytische asymmetrische Reaktionen, Synthesen von Liganden und Wirt-Gast-Systemen, die Synthese von Metallkomplexen und die Synthese von Koordinationspolymeren (MOFs) referiert werden;
- P. Balaz et al., Hallmarks of mechanochemistry: from nanoparticles to technology, in Chem. Soc. Rev., 42, 2013, 7571-7637; oder
- Tomislav Friscic, Supramolecular concepts and new techniques in mechanochemistry: cocrystals, cages, rotoxanes, open metal-organic frameworks, in Chem. Soc. Rev., 2012, 41, 3493-3510.

Die Mechanochemie wird auch zur Lösung spezieller Probleme und für Synthesen verwendet.

So beschreiben F. Cavalierie und F. Padella in dem Artikel Development of composite materials by mechanochemical treatment of post-consumer plasic wate, in Waste Management, 22 (2002), 913-916, dass aus Gemischen aus Polypropylen und Polyethylen durch Mahlen in flüssigem Kohlendioxid ein Komposit hergestellt werden kann, das keine Unverträglichkeit zwischen den beiden Polymeren mehr zeigt und das bessere Eigenschaften als die Ausgangspolymeren aufweist.

So beschreiben Haoliang Jia et al. in ihrem Artikel Formation of nanocrystalline TiC from titanium and different carbon sources by mechanical alloying in Journal of Alloys and Compounds, 472 (2009) 97-103, die Herstellung von nanokristallinem Titancarbid aus Titanpulvern und verschiedenen Kohlenstoffquellen.

Tan Xing et al. beschreiben in ihrem Artikel Ball milling: a green approach for synthesis of nitrogen doped carbon nanoparticles in Nanoscale, 2013, 5, 7970-7976, ein industriell anwendbares Syntheseverfahren zur Herstellung von stickstoffdotierten Kohlenstoffnanopartikeln.

L. Borchardt et al. beschreiben in ihrem Artikel Mechano-chemistry assisted synthesis of hierarchical porous carbon applied as supercapacitors in Beilstein Journal of Organic Cemistry, 2017, 13, 1332, die Herstellung von porösem Kohlenstoff aus Pflanzenmaterialien zur Verwendung in Kondensatoren und Elektroden.

In ihrem Artikel Mechanochemical surface modification of carbon fibers using a simple rubbing method in Journal of Composite Materials 0 (0) 1-8, beschreiben S. Motozuka et al. die Oberflächenmodifizierung von Kohlenstofffasern auf der Basis von Polyacrylnitril durch mechanische Reibung.

In ihrem Artikel Mechanochemical polymerization - controlling a polycondensation reaction between a diamine and a dialdehyde in a ball mill in RCS Adv., 2016, 6, 64799-64802, beschreiben S. Grätz und L. Borchardt die mechanochemische Polykondensation zwischen einem Diamin und einem Dialdehyd, die eine attraktive Alternative zu herkömmlichen Verfahren bietet.

In dem Konferenzbericht AIP Conference Proceedings, Volume 1664, Issue 1, 150008 (2015), Recyclig and Processing of several typical crosslinked polymer scraps with enhanced mechanical properties based on solid state mechanochemical milling, beschreiben die Autoren die Vermahlung von teilweise devulkanisierten oder entvernetzten Reifengummischnitzeln, nachvulkanisierten Fluorkautschukschnitzeln und vernetzten Polyethylenschnitzeln von Kabelabfällen, bei der sie Material mit verbesserter Verarbeitbarkeit und besseren mechanischen Eigenschaften erhalten.

Weitere Beispiel betreffend die Verwendbarkeit der Mechanochemie auf unterschiedlichen Gebieten gehen aus den folgenden Patentschriften hervor.

So offenbart die deutsche Offenlegungsschrift DE 10 2014 101 766 A1 ein Verfahren zur Rückgewinnung und gegebenenfalls Trennung von Lanthaniden als Chloride oder Oxide aus mineralischen Abfällen und Reststoffen. Bei diesem Verfahren werden zunächst Pulverpartikel hergestellt, die anschließend mechanochemisch aktiviert werden.

Aus dem europäischen Patent EP 1 830 824 B1 geht ein Verfahren zum Herstellen einer Nanopartikelzusammensetzung hervor, die Nanopartikeln eines therapeutischen Wirkstoffs umfasst. Dabei wird ein Gemisch einer Vorläuferverbindung und eines Coreaktionsmittels unter Verwendung eines Mahlmediums in einer Mahlvorrichtung vermahlen.

Aus der amerikanischen Patentanmeldung US 2017/0036967 A1 geht ein Verfahren zur Herstellung von Düngemitteln auf der Basis von Huminsäuren aus Braunkohle und Leonardit in einem mechanochemischen Reaktor für hochviskose Medien hervor.

In der internationalen Patentanmeldung WO/072527 A2 wird die mechanochemische Herstellung von Zeolithen beschrieben.

Aus der europäischen Patentanmeldung EP 1 681 270 A2 geht die mechanochemische Herstellung von weitgehend eisenfreien Metallchalkogeniden oder -arseniden aus eisenfreien Metallpulvern und Schwefel, Selen, Tellur oder Arsen hervor.

Das europäische Patent EP 1 303 460 B1 beschreibt die mechanochemische Synthese von lithiiertem Mangandioxid aus Mangandioxid und Lithiumssalzen.

Die Übersetzung der europäischen Patentschrift EP 0 963 825 B1, DE 699 11 502 T2, beschreibt die mechanochemische Behandlung von Kunststoffen wie Polyethylenterephthalat, Polystyrol, Polypropylen oder Polyethylen in der Gegenwart von flüssigem Kohlendioxid für die Kompatibilisierung und das Recycling von heterogenen Kunststoffen, die aus städtischen oder gewerblichen Abfällen gewonnen werden.

Aus der deutschen Offenlegungsschrift DE 42 40 545 A1 geht ein Verfahren zur Herstellung von Peptiden mithilfe proteolytischer Enzyme hervor, bei der Amino-geschützte Aminosäuren als Acylierungskomponente mit Carboxyl-geschützten Aminosäuren in der Gegenwart einer Kristallwasser enthaltenden Substanz wie Na₂CO₃ x 10H2O durch Vermahlen miteinander umgesetzt werden.

Aus dem japanischen Patent JP 3099064 B2 geht ein mechanochemisches Verfahren zur Herstellung eines thermoplastischen Komposits aus einem nicht thermoplastischen, natürlichen Polymer, wie Cellulose oder Chitin, und aus 5 bis 20 Gew.-% eines synthetischen Thermoplasten hervor. Das resultierende Kompositmaterial selbst ist thermoplastisch.

Aus dem Abstract der japanischen Patentanmeldung JP 2000-248110 A ist ein mechanochemisches Verfahren zur Dehalogenierung von Halogenen enthaltenden Kunststoffen mit Metalloxiden oder Metallhydroxiden von Calcium oder Strontium bekannt.

Aus dem Abstract der japanischen Patentanmeldung JP 2000 1172427 A ist ebenfalls ein mechanochemisches Verfahren zur Dehalogenierung von Halogenen enthaltenden Kunststoffen wie PVC oder flammgeschütztes Polyethylen mit Metalloxiden, Hydroxiden und Carbonaten bekannt.

Aus dem DWPI-Abstract der japanischen Patentanmeldung JP 2002-030003 A ist ein mechanochemisches Verfahren zur Dehalogenierung von Tetrabrom-bisphenol A-Epoxidharzen mit Natriumhydroxid bekannt.

Inwieweit es sich bei den Dehalogenierungsprodukten um brauchbare Wertprodukte handelt, ist nicht bekannt.

Ein weiteres Problem des Recyclings von Kunststoffen, insbesondere von sortenunreinen Kunststoffen und Kunststofflaminaten ist ihr hoher Gehalt an organisch gebundenen Halogenen, wenn zum Beispiel PVC, PVDF, PTFE oder chlorfluorierte Thermoplaste in den Kunststoffabfällen enthalten sind.

G. Cagnetta et al. beschreiben in ihrem Artikel Mechanochemical conversion of brominated POPs into useful oxybromides: a greener approach, in Sci. Rep., 2016, 6, 28394 die Zersetzung von bromierten persistenten organischen Schadstoffen durch die Umsetzung mit stöchiometrischen Mengen an Wismutoxid oder Lanthanoxid unter Bildung der entsprechenden Oxybromide und amorphem Kohlenstoff.

In ihrem Artikel Simultaneous treatment of PVC and oyster-shell wastes by mechanochemical means, in Waste Management 28 (2008) 484-488, beschreiben W. Tonganmp et al. Die Dechlorierung von PVC mit Austerschalenabfall, die Calciumchlorid und organische Produkte mit Doppelbindungen liefert.

Aus dem deutschen Patent DE 197 42 297 C2 geht ein mechanochemisches Verfahren zur reduktiven Dehalogenierung von halogenorganischen Stoffen hervor, wobei der Stoff oder das Stoffgemisch unter Zusatz von elementarem Alkalimetall, Erdalkalimetall, Aluminium, oder Eisen als Reduktionsmittel und Ethern, Polyethern, Ammoniak, Aminen, Amiden, Trialkylsilanen, Polyalkylhydrogensiloxanen oder Metallnitriden, einzeln oder in Kombination als Wasserstoffquelle in einem Schritt vermahlen wird. In dieser Weise können mit PCB oder Chlophen kontaminierte Sande oder Böden mechanochemisch dekontaminiert werden.

Aber nicht nur der hohe Organohalogengehalt von Kunststoffen wie PVC, sondern auch ein niedrigerer Organohalogengehalt kann beim Recycling von Kunststoff und Kunststofflaminaten Probleme bereiten. Denn selbst wenn die Abfälle keine organisch gebundenen Halogene enthalten, sammeln sich nach langer Gebrauchsdauer der Kunststoffe und der Laminate im Freien im Laufe der Zeit unweigerlich ubiquitäre persistente organische Schadstoffe oder langlebige organische Schadstoffe oder POP (persistent organic pollutants) wie Organochlor-Insektizide der 1. Generation wie zum Beispiel Chlordan, DDT, Dieldrin oder Toxaphen, industriell hergestellte Chemikalien wie PCB oder Nebenprodukte von Herstellungs- und Verbrennungsprodukten wie chlorierte und bromierte Dioxine und Dibenzofurane. Vertreter dieser Verbindungsklassen werden auch als das "Dreckige Dutzend" bezeichnet. Die POP sind semivolatil und können sowohl in der Gasphase als auch an Staubpartikel gebunden vorkommen und werden durch Ferntransportmechanismen weltweit verteilt. Wegen ihrer Lipophilie kommt es zur Bioakkumulation in den Fettgeweben von Tieren und Menschen. Einige der POP gelten als endokrine Disruptoren oder sind kanzerogen und werden auch mit Unfruchtbarkeit, Verhaltensauffälligkeiten und Immundefekten in Verbindung gebracht. So kontaminieren sie auch in Spuren großtechnische Produkte wie Titandioxidnanopartikel, die als Farbpigmente in Kosmetika, Tinten und Kunststoffen verwendet werden. Die Mengen mögen zwar im Einzelnen gering erscheinen, wegen der in Rede stehenden Mengen an Titandioxid können sie nicht vernachlässigt werden.

(Vgl. hierzu den Artikel von Georgios Ctistis, Peter Schön, Wouter Bakker und Gregor Luthe, PCDDs, PCDFs, and PCBs co-occurence in TiO₂ nanoparticles, in Environmental Science and Pollution Research, DOI 10.1007/s11356-015-5628-7)

Ein weiteres Problem tritt bei dem Recycling von nicht sortenreinen Kunststofflaminaten mit Metallen auf. Dieses Problem muss für ein wirtschaftlich sinnvolles Verfahren zusammen mit den anderen Problemen gelöst werden. Gleiches gilt für glasfaserverstärkte, kohlefaserverstärkte, metallfaserverstärkte und/oder textilfaserverstärkte Kunststoffe, deren Besonderheiten ebenfalls Rechnung getragen werden muss.

Allein schon wegen der enormen Mengen an Kunststoffabfällen in jeglicher Form und Zusammensetzung müssen die Probleme gelöst werden. Andererseits bieten diese Kunststoffabfälle eine nahezu unerschöpfliche und billige Rohstoffquelle für Wertprodukte.

Eine weitere nahezu unerschöpfliche und billige Rohstoffquelle ist Wüstensand. Er ist vom Wind so rund geschliffen, dass ihn kein Zement zusammenhält. So muss etwa für die Hochhäuser in Abu Dhabi der Sand aus Indonesien importiert werden, was schwerwiegende Konsequenzen hat: Strände verschwinden, Inseln rutschen ab, Meeresströmungen verändern sich. Die kleinen Körnchen sind inzwischen sogar zur lukrativen Schmugglerware avonciert. In dem Artikel in Technology Review, Juli 2017, 71-72, beschreiben Gerhard Dust und Günter Plötzner stapelbare Steine aus Wüstensand, die 13 Gew.-% Polyesterharz als Bindemittel enthalten. Nach Angabe der Autoren hat dieser Polymerbeton nur 15 % der Kohlendioxidlast von normalen Beton. Nachteilig ist jedoch, dass er teurer ist als normale Beton. Es ist deshalb aus wirtschaftlichen und ökologischen Gründen wünschenswert, dass man beide nahezu unerschöpfliche und billige Rohstoffquellen zur Herstellung von Wertprodukten nutzt.

### Aufgabe der vorliegenden Erfindung

Der vorliegenden Erfindung lag die Aufgabe zu Grunde, ein neues mechanochemisches Verfahren bereitzustellen, das es ermöglicht, in einer Kaskade von Mahlschritten, vorzugsweise in einem Mahlschritt, aus sortenreinen und nicht sortenreinen Kunststoffabfällen und Kunststofflaminaten, inklusive Metalle, Organohalogenverbindungen und/oder persistente organische Schadstoffe enthaltenden, sortenreinen und nicht sortenreinen Kunststoffabfällen und Kunststofflaminaten, Wertstoffe herzustellen, die frei von persistenten organischen Schadstoffen und anderen Organohalogenverbindungen sind und die völlig andere, neuartige und/oder bessere anwendungstechnische Eigenschaften und/oder breitere Anwendungsmöglichkeiten als die ursprünglichen Kunststoffe und Kunststofflaminate aufweisen.

Des Weiteren lag der Erfindung die Aufgabe zu Grunde, die Rohstoffquellen "Abfälle von Kunststoffen und Kunststofflaminaten" und "Wüstensand" gemeinsam für die Herstellung von neuartigen Wertprodukten zu nutzen.

Weitere Aufgaben gehen aus der nachfolgenden Beschreibung hervor.

### Die erfindungsgemäße Lösung

Demgemäß wurde das mechanochemische Verfahren zur Herstellung von Wertprodukten, die von persistenten organischen Schadstoffen und anderen Organohalogenverbindungen frei sind, aus Abfällen von sortenreinen und nicht sortenreinen Kunststoffen und Kunststofflaminaten, die mit persistenten organischen Schadstoffen kontaminiert sind und/oder andere Organohalogenverbindungen enthalten, gefunden, wobei bei dem mechanochemischen Verfahren
(i) die Abfälle zerkleinert werden, sodass eine möglichst enge Teilchengrößenverteilung resultiert,
(ii) die zerkleinerten Abfälle in eine Mühle gefüllt werden, die Mahlkugeln enthält, und durch Mahlen weiter zerkleinert werden,
(iii) mindestens ein Dehalogenierungsmittel in einem bezüglich der vorhandenen Mengen an persistenten organischen Schadstoffen und/oder anderen Organohalogenverbindungen molaren Überschuss zugesetzt wird,
(iv) die Mischung aus gemahlenen zerkleinerten Abfällen und Dehalogenierungsmittel weiter vermahlt und die Mahlung nach einer vorgewählten Zeit beendet,
(v) die resultierenden von persistenten organischen Schadstoffen und anderen Organohalogenverbindungen freien Wertprodukte von den Mahlkugeln abtrennt und die entstandenen, halogenhaltigen, wasserlöslichen Produkte durch Waschen mit wässrigen Lösungsmitteln abtrennt und/oder die entstandenen, halogenhaltigen, wasserunlöslichen Produkte nicht auswäscht, sondern als Füllstoffe in den Wertprodukten belässt und
(vi) die gewaschenen Wertprodukte nach der Trocknung sowie die nicht gewaschenen Wertprodukte überprüft, ob sie noch persistente organische Schadstoffe und/oder andere Organohalogenverbindungen enthalten, wobei
(vii) vor und/oder nach dem Verfahrensschritt (iv) mindestens ein Zusatzstoff, ausgewählt aus der Gruppe, bestehend aus thermisch und/oder mit aktinischer Strahlung härtbaren Reaktiverdünnern, niedrig siedenden organischen Lösemitteln und hochsiedenden organischen Lösemitteln ("lange Lösemittel"), Wasser, UV-Absorbern, Lichtschutzmitteln, Radikalfänger, thermolabilen radikalischen Initiatoren, Photoinitiatoren und -coinitiatoren, Vernetzungsmitteln, wie sie in Einkomponentensystemen verwendet werden, Katalysatoren für die thermische Vernetzung, Entlüftungsmitteln, Slipadditiven, Polymerisationsinhibitoren, Entschäumern, Emulgatoren, Netz- und Dispergiermitteln und Tensiden, Haftvermittlern, Verlaufmitteln, filmbildendn Hilfsmitteln, Sag control agents (SCA), rheologiesteuernden Additiven (Verdicker), Flammschutzmitteln, Sikkativen, Trockungsmittenl, Hautverhinderungsmitteln, Korrosionsinhibitoren, Wachsen, Mattierungsmitteln, Verstärkungsfasern, Nanopartikeln Mikropartikeln, Sande, Vorstufen organisch modifizierter Keramikmaterialien, Schichtsilikaten, Polyoxometallaten, inerten Gasen, gefrorenen Gasen, gefrorenen Flüssigkeiten und Flüssigkeiten und reaktiven Gasen und Flüssigkeiten, die mit den entstehenden und entstandenen Wertprodukten (co)polymerisieren, angeregter Sauerstoff, organischen und anorganische Peroxiden und Ozon,
zugesetzt wird.

Außerdem wurden Wertprodukte, hergestellt mithilfe des mechanochemischen Verfahrens, und ihre Verwendung gefunden.

### Vorteile der Erfindung

Im Hinblick auf den Stand der Technik war es überraschend und für den Fachmann nicht vorhersehbar, dass die Aufgabe der vorliegenden Erfindung mithilfe des erfindungsgemäßen mechanochemischen Verfahrens, der mithilfe des mechanochemischen Verfahrens hergestellten Wertprodukte sowie deren Verwendung gelöst werden konnte.

Insbesondere überraschte, dass mithilfe des erfindungsgemäßen mechanochemischen Verfahrens in einer Kaskade von Mahlschritten, vorzugsweise in einem Mahlschritt, aus Metalle, Organohalogenverbindungen und/oder persistente organische Schadstoffe enthaltenden, sortenreinen und nicht sortenreinen Kunststoffabfällen und Kunststofflaminaten Wertprodukte hergestellt werden konnten, die frei von persistenten organischen Schadstoffen und anderen Organohalogenverbindungen waren und die völlig andere, neuartige und/oder bessere anwendungstechnische Eigenschaften und/oder breitere Anwendungsmöglichkeiten als die ursprünglichen Kunststoffe und Kunststofflaminate aufwiesen.

Weitere Vorteile gehen aus der nachfolgenden Beschreibung hervor.

### Ausführliche Beschreibung der Erfindung

Die Kunststoffabfälle können von thermoplastischen Polymeren, Polykondensationsharzen und/oder (Co)Polymerisaten sowie von deren Gemischen stammen.

Als thermoplastische Polymere kommen übliche und bekannte lineare und/oder verzweigte und/oder blockartig, kammartig und/oder statistisch aufgebaute Polyadditionsharze, Polykondensationsharze und/oder (Co)Polymerisate von ethylenisch ungesättigten Monomeren in Betracht.

Beispiele geeigneter (Co)Polymerisate sind (Meth)Acrylat(co)polymerisate und/oder Polystyrol, Polyvinylester, Polyvinylether, Polyvinylhalogenide, Polyvinylamide, Polyacrylnitrile Polyethylene, Polypropylene, Polybutylene, Polyisoprene und/oder deren Copolymerisate.

Beispiele geeigneter Polyadditionsharze oder Polykondensationsharze sind Polyester, Alkyde, Polylactone, Polycarbonate, Polyether, Proteine, Epoxidharz-Amin-Addukte, Polyurethane, Alkydharze, Polysiloxane, Phenol-Formaldehyd-Harze, Harnstoff-Formaldehyd-Harze, MelaminFormaldehyd-Harze, Cellulose, Polysulfide, Polyacetale, Polyethylenoxide, Polycaprolactame, Polylactone, Polylactide, Polyimide, und/ oder Polyharnstoffe.

Bekanntermaßen werden die Duroplaste aus mehrfach funktionellen, niedermolekularen und/oder oligomeren Verbindungen durch thermisch und/oder mit aktinischer Strahlung initiierte (Co)Polymerisation hergestellt. Als funktionelle niedermolekulare und/oder oligomere Verbindungen kommen die nachstehend aufgeführten Reaktivverdünner, Katalysatoren und Initiatoren in Betracht.

Außerdem können die Abfälle von Polymerlegierungen wie Styrol/Polyphenylenether, Polyamid/Polycarbonat, Ethylen-Propylen-Dien-Kautschuk (EPDM), Acrylnitrile-Butadien-StyrolCopolymerisate (ABS) oder Polyvinylchlorid/Polyethylen mechanochemisch umgesetzt werden.

Des Weiteren können die Kunststoffabfälle von funktionalisierten Polymeren stammen, die funktionelle Gruppen und/oder funktionale Zusatzstoffe, wie die nachstehend beispielhaft aufgeführten, enthalten.

### Übliche und bekannte funktionelle Gruppen:

Fluor-, Chlor-, Brom- und Jodatome; Hydroxyl-, Thiol-, Ether-, Thioether-, Amino-, Peroxid-, Aldehyd-, Acetal-, Carboxyl-, Peroxycarboxyl-, Ester-, Amid-, Hydrazid- und Urethangruppen; Imid-, Hydrazon- und Hydroxim-, Amid- und Hydroxamsäuregruppen; Gruppen, die sich von Formamidin, Formamidoxim, Formamidrazon, Formhydrazidin, Formhydrazidoxim, Formamidrazon, Formoxamidin, Formhydroxamoxim und Formoxamidrazon ableiten; Nitril-, Isocyanat-, Thiocyanat-, Isothiocyanat-, Isonitril-, Lactid-, Lacton-, Lactam-, Oxim-, Nitroso-, Nitro-, Azo-, Azoxy-, Hydrazin-, Hydrazon-, Azin-, Carbodiimid-, Azid-, Azan-, Sulfen-, Sulfenamid-, Sulfonamid-, Thioaldehyd-, Thioketon-, Thioacetal-, Thiocarbonsäure-, Sulfonium-, Schwefelhalogenid, Sulfoxid-, Sulfon-, Sulfimin-, Sulfoximin-, Sulton-, Sultam-, Sulfon-, Silan-, Siloxan-, Phosphan-, Phosphinoxid-, Phosphonium-, Phosphorsäure-, Phosphorigsäure-, Phosphonsäure-, Phosphat-, Phosphinat- und Phosphonatgruppen.

### Übliche und bekannte funktionelle Zusatzstoffe für Kunststoffe:

Beispiele geeigneter Zusatzstoffe sind thermisch und/oder mit aktinischer Strahlung härtbare Reaktiverdünner, niedrig siedende organische Lösemittel und hochsiedende organische Lösemittel ("lange Lösemittel"), Wasser, UV-Absorber, Lichtschutzmittel, Radikalfänger, thermolabile radikalische Initiatoren, Photoinitiatoren und -coinitiatoren, Vernetzungsmittel, wie sie in Einkomponentensystemen verwendet werden, Katalysatoren für die thermische Vernetzung, Entlüftungsmittel, Slipadditive, Polymerisationsinhibitoren, Entschäumer, Emulgatoren, Netz- und Dispergiermittel und Tenside, Haftvermittler, Verlaufmittel, filmbildende Hilfsmittel, Sag control agents (SCA), rheologiesteuernde Additive (Verdicker), Flammschutzmittel, Sikkative, Trockungsmittel, Hautverhinderungsmittel, Korrosionsinhibitoren, Wachse, Mattierungsmittel, Verstärkungsfasern, Sande, insbesondere Wüstensand und Vorstufen organisch modifizierter Keramikmaterialien.

Beispiele geeigneter thermisch härtbarer Reaktiverdünner sind stellungsisomere Diethyloctandiole oder Hydroxylgruppen enthaltende hyperverzweigte Verbindungen oder Dendrimere, wie sie beispielsweise in den deutschen Patentanmeldungen DE 198 05 421 A1, DE 198 09 643 A1 oder DE 198 40 405 A1 beschrieben werden.

Beispiele geeigneter mit aktinischer Strahlung härtbarer Reaktivverdünner sind die in Römpp Lexikon Lacke und Druckfarben, Georg Thieme Verlag, Stuttgart, New York, 1998, auf Seite 491 unter dem Stichwort »Reaktivverdünner« beschriebenen. Im Rahmen der vorliegenden Erfindung wird unter aktinischer Strahlung Korpuskularstrahlung wie Elektronenstrahlung, Alphastrahlung, Betastrahlung und Protonenstrahlung sowie elektromagnetische Strahlung wie Infrarot, sichtbares Licht, UV-Strahlung, Röntgenstrahlung und Gammastrahlung verstanden. Insbesondere wird UV-Strahlung angewandt.

Beispiele geeigneter niedrigsiedender organischer Lösemittel und hochsiedender organischer Lösemittel ("lange Lösemittel") sind Ketone wie Methylethlyketon, Methylisoamylketon oder Methylisobutylketon, Ester wie Ethylacetat, Butylacetat, Ethylethoxypropionat, Methoxypropylacetat oder Butylglykolacetat Ether wie Dibutylether oder Ethylenglykol-, Diethylenglykol-, Propylenglykol-, Dipropylenglykol-, Butylenglykol- oder Dibutylenglykoldimethyl-, -diethyl- oder -dibutylether, N-Methylpyrrolidon oder Xylole oder Gemische aromatischer und/oder aliphatischer Kohlenwasserstoffe wie Solventnaphtha^{®}, Benzin 135/180, Dipentene oder Solvesso^{®}.

Beispiele geeigneter thermolabiler radikalischer Initiatoren sind organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether.

Beispiele geeigneter Katalysatoren für die Vernetzung sind Dibutylzinndilaurat, Dibutylzinndioleat, Lithiumdecanoat, Zinkoctoat oder Bismutsalze wie Bismutlactat oder - dimethylolpropionat.

Beispiele geeigneter Photoinitiatoren und Coinitiatoren werden in Römpp Lexikon Lacke und Druckfarben, Georg Thieme Verlag Stuttgart, 1998, Seiten 444 bis 446, beschrieben.

Beispiele geeigneter zusätzlicher Vernetzungsmittel, wie sie in sogenannten Einkomponentensystemen verwendet werden, sind Aminoplastharze, wie sie beispielsweise in Römpp Lexikon Lacke und Druckfarben, Georg Thieme Verlag, 1998, Seite 29, »Aminoharze«, dem Lehrbuch "Lackadditive" von Johan Bieleman, Wiley-VCH, Weinheim, New York, 1998, Seiten 242 ff., dem Buch "Paints, Coatings and Solvents", second completely revised edition, Edit. D. Stoye und W. Freitag, Wiley-VCH, Weinheim, New York, 1998, Seiten 80 ff., den Patentschriften US 4 710 542 A1 oder EP-B-0 245 700 A1 sowie in dem Artikel von B. Singh und Mitarbeiter "Carbamylmethylated Melamines, Novel Crosslinkers for the Coatings Industry", in Advanced Organic Coatings Science and Technology Series, 1991, Band 13, Seiten 193 bis 207, beschrieben werden, Carboxylgruppen enthaltende Verbindungen oder Harze, wie sie beispielsweise in der Patentschrift DE 196 52 813 A1 beschrieben werden, Epoxidgruppen enthaltende Verbindungen oder Harze, wie sie beispielsweise in den Patentschriften EP 0 299 420 A1, DE 22 14 650 B1, DE 27 49 576 B1, US 4,091,048 A oder US 3,781,379 A beschrieben werden, blockierte Polyisocyanate, wie sie beispielsweise in den Patentschriften US 4,444,954 A, DE 196 17 086 A1, DE 196 31 269 A1, EP 0 004 571 A1 oder EP 0 582 051 A1 beschrieben werden, und/oder Tris(alkoxycarbonylamino)-triazine, wie sie in den Patentschriften US 4,939,213 A, US 5,084,541 A, US 5,288,865 A oder EP 0 604 922 A1 beschrieben werden.

Beispiele für geeignete Entlüftungsmittel sind Diazadicycloundecan oder Benzoin.

Beispiele geeigneter Emulgatoren, Netz- und Dispergiermittel oder Tenside sind die üblichen und bekannten anionischen, kationischen, nicht-ionischen und zwitterionische Netzmittel, wie sie beispielsweise in Römpp Online, April 2014, Georg Thieme Verlag, »Netzmittel« im Detail beschrieben werden.

Ein Beispiel für einen geeigneten Haftvermittler ist Tricyclodecandimethanol.

Beispiele für geeignete filmbildende Hilfsmittel sind Cellulose-Derivate wie Celluloseacetobutyrat (CAB).

Beispiele geeigneter transparenter Füllstoffe sind solche auf der Basis von Siliziumdioxid, Aluminiumoxid oder Zirkoniumoxid; ergänzend wird noch auf das Römpp Lexikon Lacke und Druckfarben, Georg Thieme Verlag, Stuttgart, 1998, Seiten 250 bis 252, verwiesen.

Beispiele geeigneter Sag control agents sind Harnstoffe, modifizierte Harnstoffe und/oder Kieselsäuren, wie sie beispielsweise in den Literaturstellen EP 0 192 304 A1, DE 23 59 923 A1, DE 18 05 693 A1, WO 94/22968, DE 27 51 761 C1, WO 97/12945 oder "farbe + lack", 11/1992, Seiten 829 ff., beschrieben werden.

Beispiele geeigneter rheologiesteuernder Additive sind die aus den Patentschriften WO 94/22968, EP 0 276 501 A1, EP 0 249 201 A1 oder WO 97/12945 bekannten; vernetzte polymere Mikroteilchen, wie sie beispielsweise in der EP 0 008 127 A1 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate.

Ein Beispiel für ein geeignetes Mattierungsmittel ist Magnesiumstearat.

Beispiele für geeignete Verstärkungsfasern sind Kohlenstofffasern, Basaltsfasern, Borfasern, Glasfasern, Keramikfasern, Kieselsäurefasern, metallisches Verstärkungsfasern wie Stahlfasern, Aramidfasern, Kevlarfasern, Polyesterfasern, Nylonfasern, Teflonfasern, Polyethylenfasern, Polypropylenfasern, PMMA-Fasern, Ligninfasern, Cellulosefasern und andere Naturfasern wie
Samenfasern:
   wie Baumwolle (CO), Kapok (KP), Pappelflaum, Akon, Bambusfaser, Brennnesselfaser, Hanffaser (HA), Jute (JU), Kenaf, Leinen (LI), Hopfen, Ramie (RA), Hanf,
Hartfasern:
   wie Ananas, Caroá, Curauá, Henequen, Neuseeländer Flachs, Sisal (SI), Kokos (CC),
Wolle und feine Tierhaare:
   wie Wolle von Schafen (WO), Alpaka, Lama, Vikunja, Guanako, Angora (WA), Kanin, Kamelhaar (WK), Kaschmir (WS), Mohair (WM),
grobe Tierhaare:
   wie Rinderhaar, Rosshaar, Ziegenhaar,
Seiden:
   wie zum Beispiel Maulbeerseide (SE), Tussahseide (ST), Muschelseide,
Fasern aus natürlichen Polymeren:
   wie cellulosische Fasern, wie beispielsweise Viskose (CV), Modal (CMD), Lyocell (CLY), Cupro (CUP), Acetat (CA), Triacetat (CTA),
Gummifasern:
   wie zum Beispiel Gummi,
Pflanzeneiweißfasern:
   wie zum Beispiel Sojaproteinfaser, Zein und andere Prolamine,
Eiweißfasern:
   wie Fasern auf der Basis von Casein, Albuminen, Kollagen, Glykoproteinen, Globuline, Elastin, Nucloproteinen, Histonen, Keratin, Chromoproteine, Protaminen, Fibrinogen, Phosphoproteinen, Prolaminen, Myosin, Lipoproteinen und Hydrophobin,
Fasern auf Basis Stärke bzw. Glukose:
   wie zum Beispiel Alginatfasern (ALG) oder Chitosanfasern und
Fasern aus synthetischen biologisch abbaubaren Polymeren:
   Polylactidfasern (PLA) und Polyester (vgl. Biologisch abbaubare Polyester - Neue Wege mit Bismutkatalysatoren, DISSERTATION zur Erlangung des Grades eines Doktors der Naturwissenschaften des Fachbereichs Chemie der Universität Hamburg, vorgelegt von Gesa Behnken, aus Hamburg, Hamburg 2008).

Die Gewebe können auch aus mehreren unterschiedlichen Fasern bestehen, also Mischgewebe sein.

Beispiele geeigneter Vorstufen für organisch modifizierte Keramikmaterialien sind hydrolysierbare metallorganische Verbindungen insbesondere von Silizium und Aluminium.

Weitere Beispiele für die vorstehend aufgeführten Zusatzstoffe sowie Beispiele geeigneter UV-Absorber, Radikalfänger, Verlaufmittel, Flammschutzmittel, Sikkative,Trocknungsmittel, Hautverhinderungsmittel, Korrosionsinhibitoren und Wachse (B) werden in dem Lehrbuch »Lackadditive« von Johan Bieleman, Wiley-VCH, Weinheim, New York, 1998, im Detail beschrieben.

Weitere Beispiele für Zusatzstoffe sind Farbstoffe, Buntpigmente, Weißpigmente, fluoreszierende Pigmente und phosphoreszierende Pigmente (Phosphore) sowie die nachfolgend beschriebenen Materialien.

### Kohlenhydrate:

Glycerinaldehyd, Erythrose, Threose, Ribose, Arabinose, Xylose, Lyxose, Fructose, Allose, Altrose, Glucose, Mannose, Idose, Galactose Talose, Rhamnose, Aminozucker wie Neuraminsäure, Muramsäure, Glucosamin, Mannosamin, Aldonsäuren, Ketoaldonsäuren, Aldarsäuren, Pyranosen, Saccharose, Lactose, Raffinose, Panose sowie Homopolysaccharide und Heteropolysaccharide und Proteoglycane, worin der Polysaccharidanteil den Proteinanteil überwiegt, wie Stärke, Dextran, Cyclodextrin, Arabinogalactan, Cellulosen, modifizierte Cellulosen, Lignocellulosen, Chitin, Chitosan, Carageen und Glycosaminoglycane.

### Monoalkohole:

Methanol, Ethanol, Propanol, Isopropanol, Butanol, Isobutanol, tert.-Butanol, Amylalkohol Isoamylalkohol, Cyclopentanol, Hexanol, Cyclohexanol, Heptanol, Octanol, Nonanol, Decanol, Undecanol, Dodecanol und ihre Stereoisomeren.

### Polyole:

Glycerin, Trimethylolpropan, Pentaerythritol, Alditole, Cyclitole, Dimere und Oligomere von Glycerin, Trimethylolpropan, Pentaerythritol, Alditolen and Cyclitolen; vorzugsweise Tetritole, Pentitole, Hexitole, Heptitole und Octitole; bevorzugt Arabinitol, Ribitol, Xylitol, Erythritol, Threitol, Galactitol, Mannitol, Glucitol, Allitol, Altritol, Iditol, Maltitol, Isomaltitol, Lactitol, Tri-, Tetra-, Penta-, Hexa-, Hepta-, Octa-, Nona-, Deca-, Undeca- und Dodecaglycerol, -trimethylolpropan, - erythritol, -threitol and -pentaerythritol, 1,2,3,4-tetrahydroxycyclohexane, 1,2,3,4,5-pentahydroxycyclohexane, myo-, scyllo-, muco-, chiro-, neo-, allo-, epi- und cis-Inositol.

### Polyhydroxycarbonsäuren:

Glycerin-, Citronen-, Wein- Threonin-, Erythron-, Xylon-, Ascorbin-, Glucon-, Galacturon-, Iduron-, Mannuron-, Glucuron-, Guluron-, Glycuron-, Glucar-, Uluson-, Diketogulon- und Lactobionsäure.

### Polvhvdroxvphenole und -benzolcarbonsäuren:

Pyrocatechol, Resorcinol, Hydrochinon, Pyrogallol, 1,2,4-Trishydroxybenzol, Phloroglucin, 2,3-, 2,4-, 2,5-, 2,6-, 3,4- and 3,5-Dihydroxybenzoe- und 2,4,6-, 2,4,5-, 2,3,4- and 3,4,5-Trihydroxybenzolsäure (Gallensäure).

### Amine:

Ammoniak, Ammonium, Mono-, Di- und Trialkyl-, -aryl-, cycloalkyl-, -alkylaryl-, -alkylcycloakyl-, - cycloalkylaryl- und -alkylcycloalkylarylamine wie Methylamin, Ethylamin, Propylamin, Isopropylamin, Butylamin, Isobutylamin, tert.-Butylamin, Benzylamin, Cyclohexylamin, Dodecylamin, Kokosamin, Talgamin, Adamantylamin, Anilin, Ethylendiamin, Propylendiamin, Butylendiamin, Piperidin, Piperazin, Pyrazolidin, Pyrazin, Chinuklidin und Morpholin.

### Thiole:

Mercaptopropionsäure, Dimercaptosuccinsäure (DMSA), Dithiothreitol (DTT) und Octadecanthiol.

### Click-Chemie:

Verbindungen für Click-Reaktionen wie die kupferkatalysierte Cycloaddition von Aziden und Alkinen, Diels-Alder-Reaktionen, Reaktionen von z.B. Folsäure mit Alkingruppen und dipolare Cycloadditionen mit z.B. Poly(tert.-butylacrylat).

### Fettsäuren:

Laurin-, Myristin-, Öl-, Palmitin-, Linol-, Stearin-, Arachin- und Behensäure.

### Polymere und Oligomere mit funktionellen Gruppen:

Poly(trimethylammoniumethylacrlylat), Polyacrylamid, Poly(D,L-lactid-co-ethylenglykol), Pluronic^{®}, Tetronic^{®}, Polyvinylalkohol (PVA), Polyvinylpyrrolidon (PVP), Poly(alkylcyanoacrylat), Poly(milchsäure), Poly(epsilon-caprolacton), Polyethylenglykol (PEG), Poly(oxyethylen-co-propen)bisphosphonat, Poly(acrylsäure), Poly(methacrylsäure), Hyaluronsäure, Algininsäure, Pektinsäure, Poly(ethylenimin), Poly(vinylpyridin), Polyisobuten, Poly(styrolsulfonsäure), Poly(glycidylmethacrylat), Poly(methacryloyloxyethyltrimethylammoniumchlorid) (MATAC), Poly(L-lysin) und Poly(3-(trimethoxysilyl)propylmethacrylate-r-PEG-methylethermethacrylat), Proteine wie treptavidin, Trypsin, Albumin, Immunoglobulin, Oligo- und Polynucleotide wie DNA und RNA, Peptide wie Arginylglycylasparginsäure (RGD), AGKGTPSLETTP-Peptid (A54), HSYHSHSLLRMF-Peptid (C10) und Gluthathion, Enzyme wie Glucoseoxidase, Dendrimere wie Polypropylenimin-Tetrahexacontaamin-Dendrimer Generation 5 (PPI G5), Poly(amidoamine) (PAMAM) und Guanidin-Dendrimere, Phosphonsäure- und Dithiopyridin-funktionalisierte Polystyrole, funktonalisierte Polyethylenglykole (PEG: Polymerisationsgrad 4-10, insbesondere 5) wie PEG(5)-nitroDOPA, -nitrodopamin, -mimosin, -hydroxydopamin, -hydroxypyridine, - hydroxypyron und -carboxyl.

### Komplexbildner:

Komplexone wie Nitrilotriessigsäure (NTA) und Ethylendiamintetraessigsäure (EDTA), Phosphonsäuren wie [(2-Aminoethyl)hydroxymethylen]- und [(5-Aminopentyl)hyroxymethylen]diphosphonsäure sowie Kronenether.

### Metallkomplexe:

Übliche und bekannte Koordinations-, Sandwich- und Chelatkomplexe von Metallen und ihren Kationen mit organischen und anorganischen Anionen, insbesondere Fluorid, Chlorid, Bromid, Iodid, Cyanid, Cyanat, Isocyanat, Sulfide, Thiocyanat und/oder Isothiocyanat, und/oder Molekülen wie Ammoniak, Amine, Phosphine, Thiole, Borane, Kohlenmonoxid, Aromaten oder Heteroaromaten.

### Sande:

Flusssand, Meeressand, Wüstensand, Strandsand und fossiler, bergmännisch abbaubarer Sand.

Des Weiteren können die Polymerabfälle diamagnetischen Mikro- und/oder Nanopartikel wie
- Oxide aus der Gruppe, bestehend aus Scandiumoxid, Yttriumoxid, Titandioxid, Zirconiumdioxid, Yttrium-stabilisiertes Zirconiumdioxid, Hafniumdioxid, Vanadiumoxid, Nioboxid, Tantaloxid, Manganoxid, Eisenoxid, Chromoxid, Molybdänoxid, Wolframoxid, Zinkoxid, Oxide der Lanthanide, bevorzugt Lanthanoxid und Ceroxid, insbesondere Ceroxid, Oxide der Actinide, Magnesiumoxid, Calciumoxid, Strontiumoxid, Bariumoxid, Aluminiumoxid, zinkdosiertes Aluminiumoxid, Galliumoxid, Indiumoxid, Siliziumdioxid, Germaniumoxid, Zinnoxid, Antimonoxid, Bismutoxid, Zeolithe, Spinelle, Mischoxide aus mindestens zwei der genannten Oxide wie Antimon-Zinn-Oxid, Indium-Zinn-Oxid, Bariumtitanat, Bleititanat oder Bleizirkonattitanat;
- Phosphate wie Hydroxylapatit oder Calciumphosphat;
- Sulfide, Selenide und Telluride aus der Gruppe, bestehend aus Arsen-, Antimon-, Wismut-, Cadmium-, Zink-, Eisen-, Silber-, Blei- und Kupfersulfid, Cadmiumselenid, Zinnselenid, Zinkselenid, Cadmiumtellurid und Bleitellurid;
- Selen und Selendioxid (vgl. M. Shakibaie et al, »Anti-biofilm activity of biogenic selenium nanoparticles and selenium dioxide against clinical isolates of Staphylococcus aureus, Pseudomonas aeruguinosa, and Proteus mirabilis«, Journal of Trace Elements in Medicine and Biology, Bd. 29, Januar 2015, Seiten 235 bis 241);
- Nitride wie Bornitrid, Siliziumnitrid, Aluminiumnitrid, Galliumnitrid und Titannitrid;
- Phosphide, Arsenide und Antimonide aus der Gruppe, bestehend aus Aluminiumphosphid Galliumphosphid, Indiumphosphid, Aluminiumarsenid, Galliumarsenid, Indiumarsenid, Aluminiumantimonid, Galliumantimonid, Indiumantimonid;
- Kohlenstoff wie Fullerene, Graphen, Graphenoxid, funktionalisiertes Graphen, insbesondere mit Hydroxylgruppen, Carbonylgruppen, Aminogruppen und Epoxidgruppen, funktionalisiertes Graphen, Graphit, Graphitoxid, Graphiteinlagerungsverbindungen, Diamant und funktionalisierte und nicht funktionalisierte Kohlenstoff-Nanoröhrchen;
- Nanocellulose-Partikel wie Cellulosenanofasern (CNF), mikrofibrilläre Cellulose (MFC), nanokristalline Cellulose (CNC), mikrokristalline Cellulosen (MCC) und bakterielle Nanocellulose (BNC), ausgewählt;
- metallorganische Gerüstverbindungen (MOFs);
- Carbide wie Borcarbid, Siliziumcarbid, Wolframcarbid, Titancarbid oder Cadmiumcarbid;
- Boride wie Zirkonborid; sowie
- Silicide wie Molybdänsilicid
enthalten.

Des Weiteren können die Polymerabfälle magnetische und/oder magnetisierbare Nano- und/oder Mikropartikel wie
- Eisen, Kobalt, Nickel sowie Legierungen des Eisens mit mindestens einem Metall, das aus der Gruppe, bestehend aus Ruthenium, Osmium, Kobalt, Rhodium, Iridium, Nickel, Palladium, Platin, Kupfer, Silber, Gold, Zink, Cadmium Scandium, Yttrium, Lanthan, Cer, Praseodym, Neodym, Samarium, Europium, Gadolinium Terbiumoxid, Dysprosium, Holmium, Erbium, Thulium, Ytterbium, Lutetium, Titan, Zirkonium, Hafnium, Vanadium, Niob, Tantal, Chrom, Molybän, Wolfram, Mangan, Rhenium, Aluminium, Gallium, Indium, Thallium, Germanium, Zinn, Blei, Antimon und Wismut, ausgewählt sind; Beispiele geeigneter Metallegierungen sind weichmagnetische Metallegierungen wie Permalloy^{®} auf der Basis von Nickel und Eisen, Nickel-Eisen-Zink-Legierungen oder Sendust auf der Basis von Aluminium, Silicium und Eisen; RE_{1-yLay})Fe_{100-v-w-x-z}Co_{w}M_{z}Bₓ, worin RE für ein Seltenerdmetall aus der Gruppe Cer, Praseodym, Neodym, Samarium, Europium, Gadolinium, Terbiumoxid, Terbiumoxid, Dysprosium, Holmium, Erbium, Thulium, Ytterbium und Lutetium und M für ein Metall aus der Gruppe Titan, Zirkonium, Hafnium, Vanadium, Niob, Tantal, Chrom, Molybän und Wolfram stehen und v = 5-15, w ≥ 5, x = 9-30, y = 0,05-0,5 und z = 0,1-5; die vorstehend genannten Metalle und Metallegierungen können noch mindestens ein weiteres Metall und/oder Nichtmetall, das oder die aus der Gruppe, bestehend aus Lithium, Natrium, Kalium, Rubidium, Cäsium, Beryllium, Magnesium, Calcium, Strontium, Barium, Bor, Kohlenstoff, Silicium, Stickstoff, Phosphor, Arsen, Sauerstoff, Schwefel, Selen, Tellur, Fluor, Chlor, Brom und Jod, ausgewählt ist oder sind in nichtstöchiometrischen Mengen enthalten. Ein besonders gut geeignetes Material dieser Art ist NdFeB; sowie
- Metalloxide, Granate, Spinelle und Ferrite; Beispiele besonders gut geeigneter Materialien dieser Art sind Fe₃O₄, CoFe₂O₄, NiFe₂O₄, MnFe₂O₄, SrFe₂O₄, BaFe₂O₄, CuFe₂O₄, Y₃Fe₅O₁₂, CrO₂, MnO, Mn₃O₄, Mn₂O, FeO, Fe₂O₃, NiO, Cr₂O₃, CoO, Co₃O₄, BaFe₁₂O₁₉, (Bi, La,Tb)(Fe,Mn,DyPr)O₃, Ba₃Co₂Fe₂₄O₄₁, Y₃Fe₅O₁₂, NiZnFe₂O₄, Cu_{0,2}Mg_{0,4}Zn_{0,4}Fe₂O₄, Fe₃O₄(Cu,Ni,Zn)Fe₂O₄, TbMn₂O₅, PbNi_{1/33}Nb_{2/3}TiO₃-CuNiZn, BaTiO₃-NiZnFe₂O₄, dotiertes BaTiO₃, dotiertes SrTiO₃, (Ba,Sr)TiO₃, Pb(Zr,Ti)O₃, SrBi₂Ta₂O₉, PbNi_{1/3}Nb_{2/3}TiO₃-PbTio₃, PbMg_{1/3}Nb_{2/3}TiO₃-PbTiO₃, Lanthan-modifiziertes und Lanthan-Strontium-modifiziertes Pb(Zr,Ti)O₃, Pb(ZrₓTi₁₋ₓ)O₃, worin x größer als oder gleich 1, PbHfO₃, PbZrO₃, Pb(Zr,Ti)O₃, PbLa(Zr,Sn,Ti)O₃, PbNb(ZrSnTi)O₃, Pb₁₋ₓLaₓ(Zr_{y}Ti_{1-y})(_{1-x)/4}O₃, worin x größer als oder gleich 1 und y größer als oder gleich 1,NaNbO₃, (K,Na)(Nb,Ta)O₃, KNbO₃, BaZrO₃, Na_{0,25}K_{0,25}Bi_{0,5}TiO₃, Ag(Ta,Nb)O₃ oder Na_{0,5}Bi_{0,5}TiO3-K_{0,5}Bi_{0,5}TiO₃-BaTiO₃;
enthalten.

Die Abfälle können von Kunststofflaminaten abstammen, die aus mindestens zwei Schichten von mindestens zwei unterschiedlichen Kunststoffen aufgebaut sind.

Die Abfälle können aber auch von Kunststofflaminaten abstammen, die mindestens eine Schicht enthalten, die nicht aus Kunststoffen aufgebaut ist. Beispiele für Materialien, aus denen solche Schichten aufgebaut sein können, sind Holz, Pressplatten, Glas, Textil und/oder Metalle wie Chrom, Eisen, Kupfer, Silber, Gold oder Aluminium und ihre Legierungen.

Die Abfälle von Kunststofflaminaten können außerdem noch Kleber oder Kleberschichten wie zum Beispiel chemisch härtende Klebstoffe, Polymerisationsklebstoffe, Cyanacrylat-Klebstoffe (Sekundenkleber), Methylmethacrylat-Klebstoffe, anaerob härtende Klebstoffe, ungesättigte Polyester (UP-Harze), strahlenhärtende Klebstoffe, Polykondensationsklebstoffe, Phenol-Formaldehydharz-Klebstoffe, Silicone, Silanvernetzende Polymerklebstoffe, Polyimidklebstoffe, Polysulfidklebstoffe, Polyadditionsklebstoffe, Epoxidharz-Klebstoffe, Polyurethan-Klebstoffe, Polyisocyanatklebstoffe, physikalisch abbindende Klebstoffe, lösemittelhaltige Nassklebstoffe, Kontaktklebstoffe, Dispersionsklebstoffe, Plastisole, Klebstoffe ohne Verfestigungsmechanismus und Haftklebstoffe aufweisen.

Die vorstehend beschriebenen Abfälle können auch Abfälle von bereits zu minderwertigeren Produkten aufbereiteten Kunststoffen und Kunststofflaminaten sein.

Außerdem können sich die Abfälle noch durch Verwitterung, Hydrolyse, Oxidation, Reduktion, thermische Belastung, Belastung durch aktinischer Strahlung, worunter hier IR-Strahlung, sichtbares Licht und UV-Strahlung zu verstehen ist, in ihrer Struktur und in ihren Eigenschaften geändert haben.

Nicht zuletzt werden die Kunststoffe und die Laminate nach langer Gebrauchsdauer und Lagerung im Freien im Laufe der Zeit unweigerlich durch die ubiquitären persistenten organischen Schadstoffe oder POP wie Organochlor-Insektizide der 1. Generation wie zum Beispiel Chlordan, DDT, Dieldrin oder Toxaphen, industriell hergestellte Chemikalien wie PCB oder Nebenprodukte von Herstellung- und Verbrennungsprodukten wie chlorierte und bromierte Dioxine und Dibenzofurane kontaminiert. Vertreter dieser Verbindungsklassen werden auch als das "Dreckige Dutzend" bezeichnet. Die POP sind semivolatil und können sowohl in der Gasphase als auch an Staubpartikel gebunden vorkommen und werden durch Ferntransportmechanismen weltweit verteilt. Wegen ihrer Lipophilie kommt es zur Bioakkumulation in den Fettgeweben von Tieren und Menschen. Einige der POP gelten als endokrine Disruptoren oder sind kanzerogen und werden auch mit Unfruchtbarkeit, Verhaltensauffälligkeiten und Immundefekten in Verbindung gebracht.

Da die Kunststoffabfälle und Laminatabfälle durch ihre lange wilde Lagerung in der Umwelt, ihre lange Verweilzeit im Meerwasser oder ihre Langzeitlagerung auf einer geordneten Deponie mit den ubiquitär auftretenden persistenten organischen Schadstoffen (Persistent Organic Pollutants, POPs) kontaminiert sind, müssen diese bei der Aufarbeitung der Kunststoffabfälle unbedingt berücksichtigt werden, damit die Wertprodukte frei von POPs und von anderen Organohalogenverbindungen sind. Bekannte Beispiele für Organohalogenverbindungen sind Perfluorooctansäure bromierte Flammschutzmittel wie polybromierte Biphenyle oder polybromierte Diphenylether, Dichlorethane, Trichlorethane und Tetrachlorethane, Hexachlorbutadien, Hexachlorcyclohexan oder Chlorparaffine, die unter anderem als Dioxin- und Dibenzofuran-Quellen fungieren können.

Es ist ein ganz wesentlicher Vorteil des erfindungsgemäßen Verfahrens, dass diese Halogenverbindungen bei der Herstellung der Wertprodukte eliminiert werden.

Darüber hinaus können den vorstehend beschriebenen Abfällen noch zahlreiche andere Stoffe anhaften, wie zum Beispiel Mineralien, Sande, Böden, Erdöle, Öle, Fette, Wachse, Teere, Tiere wie Muscheln, Pflanzen, Algen, Nahrungsmittel (verdorben und unverdorben), Fäkalien, Windeln, Haare, Papierreste, korrodierte Metallreste, Glasreste, Farbreste, Lackreste usw.. Es ist ein ganz besonderer Vorteil des erfindungsgemäßen mechanochemischen Verfahrens, dass diese Verunreinigungen nicht notwendigerweise von den Kunststoffabfällen und den Abfällen von Kunststofflaminaten abgetrennt werden müssen. So können sie in das erfindungsgemäße mechanochemische Verfahren eingehen, sich ebenfalls vermahlen lassen und sich mit den Kunststoffabfällen und den Abfällen von Kunststofflaminaten zu Wertprodukten umwandeln lassen. Auch können Muscheln, Mineralien, Sande, Böden, Metallreste und Glasreste zu Füllstoffen für die Wertprodukte vermahlen werden. Organische, tierische und pflanzliche Verunreinigungen können Biokohlenstoff bilden, der ebenfalls zu einem Bestandteil der Wertprodukte werden kann.

Bei einer vorteilhaften Ausführungsform des erfindungsgemäßen Verfahrens zur Herstellung der Wertprodukte werden die vorstehend beschriebenen gereinigten oder ungereinigten Abfälle von Kunststoffen und/oder Kunststofflaminaten in einem ersten Verfahrensschritt zerkleinert, um eine möglichst enge Teilchengrößenverteilung zu erzielen. Dies hat den Vorteil, dass bei dem erfindungswesentlichen Mahlvorgang bezüglich der Teilchen im Wesentlichen überall dieselben Bedingungen herrschen, so dass einheitliche Wertprodukte resultieren. Vorzugsweise liegt die durch Siebanalyse ermittelte mittlere Teilchengröße bei 2 mm bis 1 µm, bevorzugt 1 mm bis 1 µm und insbesondere 900 µm bis 1 µm. Vorzugsweise wird dieser Verfahrensschritt mithilfe von Schneidemühlen, Shreddern, Prallmühlen, Spiralstrahlmühlen, Fließbett-Gegenstrahlmühlen, Bexmills, Vorbrecher, Hammermühlen oder Mikropulverizern durchgeführt.

Der erfindungswesentliche Mahlschritt kann vorzugsweise in einer Kugelmühle, einer Trommelmühle, einer Vibrationsmühle, einer Planetenmühle, einem Scherer, einem Quetscher, einem Mörser und/oder einem Rubbingsystem durchgeführt werden. Der erfindungswesentliche Mahlschritt kann in einer Kaskade von hintereinandergeschalteten Mühlen durchgeführt werden, sodass die Abfälle optimal zerkleinert und in einheitliche Wertprodukte überführt werden können. Es ist indes auch möglich, nur eine einzelne Mühle zu verwenden, die für den jeweiligen Einzelfall optimiert ist. Die mittlere Teilchengröße der resultierenden Wertprodukte kann breit variieren und über die Verfahrensbedingungen eingestellt werden. Vorzugsweise liegt die mittlere Teilchengröße bei <1000 nm bis 1 nm, bevorzugt bei 650 nm ± 200 nm.

Geeignete kugelförmige Mahlkörper bestehen beispielsweise aus Zirkonoxid (Yttrium-stabilisiert), Zirkonoxid (Cer-stabilisiert), Zirkonmischoxid, Zirkonsilikat, Aluminiumoxid, Steatit, Diamantperlen, Glasperlen, Glas, Kohlenstoffstahl, Chromstahl, Nirosta-Stahl, Zirkonsilikat/Zirkonoxid/Siliciumnitrid, Borcarbid, Siliziumcarbid oder Wolframcarbid. Der Fachmann kann die geeigneten Mahlkörper für jeden Einzelfall aufgrund seiner allgemeinen Fachkenntnisse gezielt auswählen.

Das Verfahren kann außerdem über folgende Parameter gesteuert werden: den Prall, die Mahlzeit, die Größe der Kugeln, die Temperaturbereiche (Gefrierbereich <0 °C; Raumtemperatur = 23 °C; Wärme 20 bis 100 °C; Hitze >100 °C), die Druck- und Partialdruckbereiche wie Unterdruck, Normaldruck und Überdruck, die Gegenwart von inerten Gasen wie Edelgase, Stickstoff oder Kohlendioxid, die Gegenwart von flüssigen Gasen wie flüssiger Stickstoff oder flüssiges Kohlendioxid, die Gegenwart von gefrorenen Flüssigkeiten wie festes Kohlendioxid oder Eis und/oder die Gegenwart von Flüssigkeiten wie Wasser.

Das Verfahren kann außerdem durch die Verwendung externer Kühl- oder Heizaggregate gesteuert werden. So kann auch die Temperatur im Temperaturbereich zwischen flüssigem Stickstoff und Eis beispielsweise durch festes und flüssiges Methylencyclohexan (Schmelzpunkt: -126 °C) gezielt eingestellt werden.

Durch die Kühlung unter bzw. weit unter die Glasübergangstemperaturen der zu vermahlenden Kunststoffe werden diese spröde und sind dadurch besonders gut zu vermahlen, ohne dass sie schmieren. Dadurch wird auch der Mahlvorgang beschleunigt.

In einer vorteilhaften Ausführungsform des erfindungsgemäßen mechanochemischen Verfahrens können die Mühlen bzw. deren Inhalt mit Ultraschall, Schall und/oder mit aktinischer Strahlung, insbesondere Mikrowellenstrahlung, IR-Strahlung, sichtbares Licht, UV-Strahlung, weiche Röntgenstrahlung und Elektronenstrahlung bestrahlt werden. Dadurch werden auf den zu vermahlenden Partikeln zusätzliche reaktive Radikale erzeugt, die neue Reaktionswege eröffnen.

Für das erfindungsgemäße Verfahren ist es außerdem wesentlich, dass die Abfälle in der Gegenwart eines Dehalogenierungsmittels gemahlen werden. Die Menge des eingesetzten Dehalogenierung mittels richtet sich in erster Linie nach der Menge des in den Abfällen vorhandenen Halogens. Auf jeden Fall ist mindestens so viel an Dehalogenierungsmittel zuzusetzen, dass die vorstehend beschriebenen persistenten organischen Schadstoffe die anderen Organohalogenverbindungen eliminiert werden.

Für die Dehalogenierung stehen verschiedene Möglichkeiten zur Verfügung.

### Reduktive Dehalogenierung:

Als Dehalogenierungsmittel kommen zum Beispiel Reduktionsmittel für die reduktive Dehalogenierung wie Alkalimetalle wie Lithium, Natrium, Rubidium, Cäsium, Erdalkalimetalle wie Magnesium, Calcium und Strontium, Lösungen von Alkalimetallen und Erdalkalimetallen in flüssigem Ammoniak und flüssigen Aminen sowie anderen wasserähnlichen Lösungsmitteln, Zintl-Phasen wie Na₄Sn₉, Na₄Pb_{g}, Na₂Pb₁₀, Na₃[Cu@Sn₉], Na₇[Ge₉CuGe₉] oder Na₁₂[Sn₂@Cu₁₂Sn₂₀], Graphiteinlagerungsverbindungen von Alkalimetallen wie C₈K, Hydride wie salzartige Hydride wie Kalziumhydrid oder Natriumhydrid, komplexe Hydride wie Lithiumaluminiumnitrid, Natriumborhydrid oder Super-Hydrid^{®} (Li[B(C₂H₅)₃H]), komplexe Übergangsmetallhydride oder Metallhydride wie Zirkonhydrid oder Metalle wie Aluminium, Eisen, Zink, Lanthan, Lanthanide und Actinide,.

Vorteilhafterweise werden den Reduktionsmitteln eine Wasserstoffquelle mit leicht aktivierbarem Wasserstoff zugesetzt. Beispiele geeigneter Wasserstoffquellen sind Ether, Polyether, die vorstehend beschriebenen Metallhydride, flüssiger Ammoniak, Trialkylsilane und/oder Polyalkylhydrogensiloxane.

Beispiele geeigneter Ether sind einfache symmetrische oder asymmetrische aliphatische Ether, cyclische Ether oder Polyether wie zum Beispiel Diethylether, Propylether, Isopropylether, n-Butylether, dimere oder trimere Polyether, Kronenether, Kryptanden und/oder Spheranden (Wirt-Gastmoleküle).

Beispiele geeigneter Amine sind aliphatische Amine wie niedere primäre, sekundäre oder tertiäre aliphatische Amine, zum Beispiel primäre, sekundäre oder tertiäre aliphatische und alizyklischen Monoamine oder Polyamine, insbesondere Methylamin, Ethylamin, 1- und 2-Propylamin, 1- und 2-Butylamin, Ethylendiamin, Tri-, Tetra-, Penta-, oder Hexamethylendiamin, Dimethylamin, Diethylamin, Di-n-propylamin, Cyclopropyl- und Cyclohexylamin, Stickstoffheterocyclen und Perhydrostickstoffheterocyclen, zum Beispiel Piperidin, 1-(2-Aminoethyl)-piperazin, 1-(2-Aminoethyl)-pyrrolidin, 1-(2-Aminoethyl)-piperidin oder 4-(2-Aminoethyl)-morpholin.

Beispiele geeigneter Amide als Alternativen zu Aminen sind 1,3-Dimethyl-3,4,5,6-Tetrahydroxy-2(1H)-pyrimidinon (Dimethylpopylenharnstoff, DMPU), 1,3-Dimethyl-2-imidazolidinon (N,N-Dimethylethylenharnstoff, DMEU), 1-Methyl-2-pyrrolidon (NMP) 1-Methyl-2-pyrrolidon, N,N-Dimethylacetamid, N,N-Diethylpropionamid und N,N-Diethylisobutyramid.

Bei dem erfindungsgemäßen mechanochemischen Verfahren können Mahlhilfen verwendet werden. Dabei handelt es sich vorzugsweise um Stoffe, die die Oberflächenenergie und/oder die plastische Deformation von Feststoffen bei Einwirkung mechanischer Energie reduzieren können. Beispiele geeigneter Stoffe dieser Art sind oberflächenaktive Stoffe in verschiedenen Zustands- oder Aufbereitungsformen, wie zum Beispiel quartäre Ammoniumverbindungen, die nicht nur in Reinsubstanz eingesetzt werden können, sondern auch immobilisiert an inerten, oberflächenaktiven Trägern wie Schichtsilikaten oder Tone (sogenannte organophile Bentonite), substituierte Alkylimidazole und Sulfosuccinamide, Fettsäuren, Fettsäureester und -amide, primäre, sekundäre und tertiäre Alkylfettamine mit einer oder mehreren Amingruppen, alizyklische Amine, wie zum Beispiel Cyclohexylamine, Polyhydrostickstoffheterocyclen, wie zum Beispiel Piperidin, Mono-, Di- und Trialkanolamine, Glykole, Polyalkylenglykole, wie zum Beispiel Polyethylenglykole und Polypropylenglykole und deren Mono- oder Diether, Organosiliciumverbindungen, insbesondere Silikone, sowie spezielle für den Zweck geeignete anorganische Salze wie Aluminiumchlorid.

Es ist ein besonderer Vorteil der reduktiven Dehalogenierung, dass im Falle von Metall-Kunststofflaminaten und/oder mit Metallen verunreinigten Kunststoffabfällen, der Metallanteil als Reduktionsmittel fungieren kann.

Die metallischen Reduktionsmittel können in einer Zubereitung dispergiert oder suspendiert vorliegen, beispielsweise in einer nicht oxidieren Flüssigkeit oder der flüssigen Wasserstoffquelle. Bevorzugt sind Dispersionen aus dem Metall in Weißöl, Paraffin und Polyethern. Des Weiteren können die metallischen Reduktionsmittel mit einem festen inerten Träger vermengt oder darauf aufgebracht werden.

### Dehalogenierung unter Bildung von Metalloxyhalogeniden:

Als Dehalogenierungsmittel können Oxide wie Antimonoxid, Bismutoxid, Lanthanoxid, Yttriumoxid, Ceroxid, Praseodymoxid, Neodymoxid, Samariumoxid, Europiumoxid, Gadoliniumoxid, Terbiumoxid, Dysprosiumoxid, Holmiumoxid, Erbiumoxid, Thuliumoxid, Ytterbiumoxid und/oder Lutetiumoxid verwendet werden. Diese bilden mit dem organisch gebundenen Chlor oder Brom die entsprechenden Oxychloride und Oxybromide, die wiederum selbst als Wertprodukte angesehen werden können oder als Füllmaterialien in die Wertprodukte eingelagert werden.

### Dehalogenierung unter Bildung von Metallhalogeniden:

Als Dehalogenierungsmittel können Metallhydroxide wie Lithium-, Natrium-, Kalium-, Rubidium-, Cäsium-, Magnesium-, Calcium-, Strontium-, Barium-, Zink-, Blei-, Nickel-, Kobalt-, Kupfer-, und Zinnhydroxyd sowie die Eisenhydroxide verwendet werden. Diese bilden mit dem organisch gebundenen Chlor oder Brom die entsprechenden Chloride und Bromide, die wiederum selbst als Wertprodukte angesehen werden können oder als Füllmaterialien in die Wertprodukte eingelagert werden.

### Dehalogenierung durch Carbonate:

Beispiele geeigneter Carbonate sind Carbonate von Metallen, deren Chloride und Bromide leicht wasserlöslich sind. Besonders gut geeigneter Carbonate sind natürliche Mineralien wie Magnesit, Strontianit, Witherit, Dolomit, Aragonit, Kalzit, Vaterit, Zinkspat, Gaylussit, Natrit, Soda, Trona, Muschelkalk und Korallenkalk sowie synthetischesLithiumcarbonat, Natriumbicarbonat, Kaliumcarbonat, Magnesiumcarbonat, Calciumcarbonat, Strontiumcarbonat und Bariumcarbonat.

### Oxidative Dehalogenierung:

Rhenium-katalysierte oxidative Dehalogenierung mit Wasserstoffperoxid, enzymatische Dehalogenierung mit Oxydasen/Wasserstoffperoxid und Dehalogennasen und Peroxidasen wie Rettich-Homogenisat oder Rettichsaft von Raphanus sativus mit Wasserstoffperoxid, Advanced Oxidation Processes (AOP, aktivierte Oxidationsverfahren) unter Verwendung von UV-Strahlung, Wasserstoffperoxid und/oder katalytische Nassoxidation durch die Bildung von Hydroxyl-Radikalen.

### Enzymatische Dehalogenierung:

Alkylhalidasen, (S)-2-Halogencarbonsäure-Dehalogenasen, Haloacetat-Dehalogenasen, Haloalkan-Dehalogenasen, 4-Chlorbenzoat-Dehalogenasen, Atrazin-Chlorhydrolasen, 4-Chlorbenzoyl-Coenzym A-Dehalogenasen, (R)-2-Halogencarbonsäure-Dehalogenasen, 2-Halogencarbonsäure-Dehalogenasen (Konfiguration-invertierend) und 2-Halogencarbonsäure-Dehalogenasen (Konfiguration-erhaltend).

Bei dem erfindungsgemäßen mechanochemischen Verfahren werden die POPs sowie die gegebenenfalls vorhandenen Organohalogenverbindungen zu mindestens 99,5 %, vorzugsweise zu 99,6 %, bevorzugt zu 99,7% und insbesondere zu 99,8 % ihrer jeweiligen Ausgangsmenge eliminiert. Insbesondere werden sie so weitgehend entfernt, dass ihr Gehalt in den Wertprodukten unterhalb der jeweiligen Nachweisgrenze üblicher und bekannter Nachweismethoden liegt. In diesem Sinne sind die Wertprodukte von persistenten organischen Schadstoffen und anderen Organohalogenverbindungen frei.

Den Gemischen aus Abfällen und Dehalogenierungsmitteln können vor der Mahlung noch mindestens ein funktioneller Zusatzstoff zugegeben werden.

Beispiele geeigneter Zusatzstoffe sind Aktivkohlen und Kohlen wie Biokohlen, pyrogener Kohlenstoff, Pflanzenkohlen, Holzkohlen, Siebrückstände von Holzkohlen, Holzaschen, Aktivkohlen, Steinkohlen, Tierkohlen, Tierabfallkohlen, pyrogener Kohlenstoff unterschiedlichen Pyrolysegrades, funktionalisierte Kohlen, vorbehandelte Kohlen, gewaschene Kohlen und extrahierte Kohlen. Insbesondere wird Biokohle und/oder pyrogener Kohlenstoff verwendet. Diese Materialien sind üblich und bekannt und gehen beispielsweise aus der deutschen Offenlegungsschrift DE 10 2015 010 041 A1, Absätze [0055] bis [0064], hervor.

Die Aktivkohle oder die Biokohle kann in situ bei der Mahlung aus organischen Siedlungsabfällen, organischen Abfällen aus der Industrie, dem Gewerbe, der Land- und Forstwirtschaft und dem Gartenbau sowie aus ligninhaltigen Materialien, wie zum Beispiel Grünabfall, Mulchmaterial, Holzabfälle, Biogasanlagenabfälle, die getrocknet und/oder gefiltert sein können, und Spelzen.

Es ist noch ein weiterer besonderer Vorteil des erfindungsgemäßen mechanochemischen Verfahrens, dass nämlich die Holzbestandteile von Holz- und Spanholz-Kunststoff- Laminaten ebenfalls der Verkohlung unterliegen.

Die Aktivkohle und Kohlen können Schwermetalle binden, als Katalysatoren fungieren, als Kristallkeime für die Bildung von mesoporösen oder nanoporösen Materialien dienen, toxische und nicht toxische Gase binden sowie Halogen und Halogenwasserstoffe als Charge-Transfer-Komplexe binden.

Als ein weiterer Zusatzstoff kann saures, basisches und neutrales Wasser als Reaktionspartner zugesetzt werden oder um die Umsetzungen bei der Mahlung zu beschleunigen.

Weitere geeignete Zusatzstoffe sind Stoffe, die Cokristalle bilden, die Reaktionen bei der Mahlung beschleunigen und/oder die stofflichen Eigenschaften verbessern, indem Radikale an den Kanten, Spitzen oder sonstigen exponierten Stellen der Zusatzstoffe gebildet werden, die mit den Kunststoffabfällen und den sich bildenden mesoporösen oder nanoporösen Materialien reagieren und ihr durch Radikale initiierte Bindungen eingehen. Beispiele geeigneter Zusatzstoffe dieser Art sind die vorstehend im Detail aufgeführten Nanopartikel oder Nanofasern.

Weitere geeignete Zusatzstoffe sind die vorstehend beschriebenen funktionellen Zusatzstoffe, wie sie üblicherweise in Kunststoffen verwendet werden.

Weitere Beispiele geeigneter Zusatzstoffe sind insbesondere Schichtsilikate, die vorzugsweise als Nanopartikel und/oder Mikropartikel einer mittleren Teilchengröße d₅₀ von 1 nm bis <1000 µm, vorzugsweise 10 nm bis 900 µm, bevorzugt 300 nm bis 1000 nm, besonders bevorzugt 650 ± 200 nm, ganz besonders bevorzugt 650 ± 150 nm und insbesondere 650 ± 100 nm vorliegen

Die elementare Zusammensetzung und die Struktur der Schichtsilikat-Mikro- und/oder Nanopartikel können ebenfalls sehr weit variieren. Bekannt ist beispielsweise die Einteilung der Silikate in die folgenden Strukturen:
- Inselsilikate
- Gruppensilikate
- Ringsilikate
- Ketten- und Bandsilikate
- Übergangsstrukturen zwischen Ketten- und Schichtsilikaten
- Schichtsilikate
- Gerüstsilikate

Schichtsilikate sind Silikate, deren Silikationen aus Schichten eckenverknüpfter SiO₄- Tetraeder bestehen. Diese Schichten und/oder Doppelschichten sind untereinander nicht weiter verknüpft. Die technisch wichtigen und in Sedimentgestein verbreiteten Tonminerale sind ebenfalls Schichtsilikate. Der schichtartige Aufbau dieser Minerale bestimmt die Form und die Eigenschaften der Kristalle. Sie sind meist tafelig bis blättrig mit guter bis perfekter Spaltbarkeit parallel zu den Schichten. Die Zähligkeit der Ringe, aus denen sich die Silikatschichten zusammensetzen, bestimmt oft die Symmetrie und Form der Kristalle. Zwischen den Schichten können sich Wassermoleküle, große Kationen und/oder Lipide einlagern.

Beispiele geeigneter Schichtsilikate gehen aus der nachfolgenden Tabelle 1 hervor. Die Aufzählung ist beispielhaft und nicht abschließend.

**Tabelle 1: Summenformeln von geeigneten Schichtsilikaten ^{a)}**

| **Nr.** | **Typ** | **Summenformel** |
|---|---|---|
| 1 | Martinit | (Na,Ca)₁₁Ca₄(Si,S,B)₁₄B₂O₄₀F₂·4(H₂O) |
| 2 | Apophyllit-(NaF) | NaCa₄Si₃O₂₀F·8H₂O |
| 3 | Apophyllit-(KF) | (K,Na)Ca₄Si₈O₂₀(F,OH)·8H₂O |
| 4 | Apophyllit-(KOH) | KCa₄Si₈O₂₀(OH,F)·8H₂O |
| 5 | Cuprorivait | CaCuSi₄O₁₀ |
| 6 | Wesselsit | (Sr,Ba)Cu[Si₄O₁₀] |
| 7 | Effenbergerit | BaCu[Si₄O₁₀] |
| 8 | Gillespit | BaFe²⁺Si₄O₁₀ |
| 9 | Sanbornit | BaSi₂O₅ |
| 10 | Bigcreekit | BaSi₂O₅·4H₂O |
| 11 | Davanit | K₂TiSi₆O₁₅ |
| 12 | Dalyit | K₂ZrSi₆O₁₅ |
| 13 | Fenaksit | KNaFe²⁺Si₄O₁₀ |
| 14 | Manaksit | KNaMn²⁺[Si₄O₁₀] |
| 15 | Ershovit | K₃Na₄(Fe,Mn,Ti)₂[Si₈O₂₀(OH)₄]·4H₂O |
| 16 | Paraershovit | Na₃K₃Fe³⁺₂Si₈O₂₀(OH)₄·4H₂O |
| 17 | Natrosilit | Na₂Si₂O₅ |
| 18 | Kanemit | NaSi₂O₅·3H₂O |
| 19 | Revdit | Na₁₆Si₁₆O₂₇(OH)₂₆·28H₂O |
| 20 | Latiumit | (Ca,K)₄(Si,Al)₅O₁₁(SO₄,CO₃) |
| 21 | Tuscanit | K(Ca,Na)₆(Si,Al)₁₀O₂₂(SO₄,CO₃,(OH)₂)·H₂O |
| 22 | Carletonit | KNa₄Ca₄Si₈O₁₈(CO₃)₄(OH,F)·H₂O |
| 23 | Pyrophyllit | Al₂Si₄O₁₀(OH)₂ |
| 24 | Ferripyrophyllit | Fe³⁺Si₂O₅(OH) |
| 25 | Macaulayit | (Fe³⁺,Al)₂₄Si₄O₄₃(OH)₂ |
| 26 | Talk | Mg₃Si₄Q₄₀(OH)₂ |
| 27 | Minnesotait | Fe²⁺₃Si₄O₁₀(OH)₂ |
| 28 | Willemseit | (Ni,Mg)₃Si₄O₁₀(OH)₂ |
| 29 | Pimelit | Ni₃Si₄O₁₀(OH)₂·4H₂0 |
| 30 | Kegelit | Pb₄Al₂Si₄O₁₀(SO₄)(CO₃)₂(OH)₄ |
| 31 | Aluminoseladonit | K(Mg,Fe²⁺)Al[(OH)₂\|Si₄O₁₀] |
| 32 | Ferroaluminoseladonit | K(Fe²⁺,Mg)(Al,Fe³⁺)[(OH)₂\|Si₄O₁₀] |
| 33 | Seladonit | K(Mg,Fe²⁺)(Fe³⁺,Al)Si₄O₁₀(OH)₂ |
| 34 | Chromseladonit | KMgCr[(OH)₂\|Si₄O₄₀] |
| 35 | Ferroseladonit | K(Fe²⁺,Mg)(Fe³+,Al)[(OH)₂\|Si₄O₁₀] |
| 36 | Paragonit | NaAl₂(Si₃Al)O₁₀(OH)₂ |
| 37 | Boromuskovit | KAl₂(Si₃B)O₁₀(OH,F)₂ |
| 38 | Muskovit | KAl₂(Si₃Al)O₁₀(OH,F)₂ |
| 39 | Chromphyllit | K(Cr,Al)₂[(OH, F)₂\|AlSi₃O₁₀] |
| 40 | Roscoelith | K(V,Al,Mg)₂AlSi₃O₁₀(OH)₂ |
| 41 | Ganterit | (Ba, Na, K)(Al,Mg)₂[(OH,F)₂\|(Al,Si)Si₂O₁₀] |
| 42 | Tobelith | (NH₄,K)Al₂(Si₃Al)O₁₀(OH)₂ |
| 43 | Nanpingit | CsAl₂(Si,Al)₄O₁₀(OH, F)₂ |
| 44 | Polylithionit | KLi₂AlSi₄O₁₀(F,OH)₂ |
| 45 | Tainiolith | KLiMg₂Si₄O₁₀F₂ |
| 46 | Norrishit | KLiMn³⁺₂Si₄O₁₂ |
| 47 | Shirokshinit | KNaMg₂[F₂\|Si₄O₄₀] |
| 48 | Montdorit | KMn_{0.5}²⁺Fe_{1.5}²⁺Mg_{0.5}[F₂\|Si₄O₁₀] |
| 49 | Trilithionit | KLi_{1.5}Al_{1.5}[F₂\|AlSi₃O₁₀] |
| 50 | Masutomilith | K(Li,Al,Mn²⁺)₃(Si,Al)₄O₁₀(F,OH)₂ |
| 51 | Aspidolith-1M | NaMg₃(AlSi₃)O₁₀(OH)₂ |
| 52 | Fluorophlogopit | KMg₃(AlSi₃)O₁₀F₂ |
| 53 | Phlogopit | KMg₃(Si₃Al)O₁₀(F,OH)₂ |
| 54 | Tetraferriphlogopit | KMg₃[(F,OH)₂\|(Al,Fe³⁺)Si₃O₁₀] |
| 55 | Hendricksit | K(Zn,Mn)₃Si₃AlO₁₀(OH)₂ |
| 56 | Shirozulith | K(Mn²⁺,Mg)₃[(OH)₂\|AlSi₃O₁₀] |
| 57 | Fluorannit | KFe₃²⁺[(F,OH)₂\|AlSi₃O₁₀] |
| 58 | Annit | KFe²⁺₃(Si₃Al)O₁₀(OH,F)₂ |
| 59 | Tetraferriannit | KFe²⁺₃(Si₃Fe³⁺)O₁₀(OH)₂ |
| 60 | Ephesit | NaLiAl₂(Al₂Si₂)O₄₀(OH)₂ |
| 61 | Preiswerkit | NaMg₂Al₃Si₂O₁₀(OH)₂ |
| 62 | Eastonit | KMg₂Al[(OH)₂\|Al₂Si₂O₁₀] |
| 63 | Siderophyllit | KFe₂²⁺Al(Al₂Si₂)O₁₀(F,OH)₂ |
| 64 | Anandit | (Ba,K)(Fe²⁺,Mg)₃(Si,Al,Fe)₄O₁₀(S,OH)₂ |
| 65 | Bityit | CaLiAl₂(AlBeSi₂)O₁₀(OH)₂ |
| 66 | Oxykinoshitalith | (Ba, K)(Mg, Fe²⁺,Ti⁴⁺)₃(Si,Al)₄O₁₀O₂ |
| 67 | Kinoshitalith | (Ba, K)(Mg,Mn,Al)₃Si₂Al₂O₁₀(OH)₂ |
| 68 | Ferrokinoshitalith | Ba(Fe²⁺,Mg)₃[(OH,F)₂\|Al₂Si₂O₁₀] |
| 69 | Margarit | CaAl₂(Al₂Si₂)O₁₀(OH)₂ |
| 70 | Chernykhit | BaV₂(Si₂Al₂)O₁₀(OH)₂ |
| 71 | Clintonit | Ca(Mg,Al)₃(Al₃Si)O₁₀(OH)₂ |
| 72 | Wonesit | (Na,K,)(Mg,Fe,Al)₆(Si,Al)₈O₂₀(OH,F)₄ |
| 73 | Brammallit | (Na,H₃O)(Al,Mg,Fe)₂(Si,Al)₄O₁₀[(OH)₂,H₂O] |
| 74 | Illit | (K,H₃O)Al₂(Si₃Al)O₁₀(H₂O,OH)₂ |
| 75 | Glaukonit | (K,Na)(Fe³⁺,Al,Mg)₂(Si,Al)₄O₁₀(OH)₂ |
| 76 | Agrellit | NaCa₂Si₄O₁₀F |
| 77 | Glagolevit | NaMg₆[(OH,O)₈\|AlSi₃O₁₀]·H₂O |
| 78 | Erlianit | Fe²⁺₄Fe³⁺₂Si₆O₁₅(OH)₈ |
| 79 | Bannisterit | (Ca,K,Na)(Mn²⁺, Fe²⁺, Mg,Zn)₁₀(Si,Al)₁₀O₃₃(OH)₃·nH₂O |
| 80 | Bariumbannisterit | (K,H₃O)(Ba,Ca)(Mn²⁺,Fe²⁺,Mg)₂₁(Si,Al)₃₂O₈₀(O,OH)₁₆·4-12 H₂O |
| 81 | Lennilenapeit | K₆₋₇(Mg,Mn,Fe²⁺,Fe³⁺,Zn)₄₈(Si,Al)₇₂(O,OH)₂₁₆·16H₂O |
| 82 | Stilpnomelan | K(Fe²⁺,Mg,Fe³⁺,Al)₈(Si,Al)₁₂(O,OH)₂₇·2H₂O |
| 83 | Franklinphilit | (K,Na)₁₋ₓ(Mn²⁺,Mg,Zn,Fe³⁺)₈(Si,Al)₁₂(O,OH)₃₆·nH₂O |
| 84 | Parsettensit | (K,Na,Ca)_{7.5}(Mn,Mg)₄₉Si₇₂O₁₆₈(OH)₅₀·nH₂O |
| 85 | Middendorfit | K₃Na₂Mn₅Si₁₂(O,OH)₃₆·2H₂O |
| 86 | Eggletonit | (Na,K,Ca)₂(Mn,Fe)₈(Si,Al)₁₂O₂₉(OH)₇·11H₂O |
| 87 | Ganophyllit | (K,Na)ₓMn²⁺₆(Si,Al)₁₀O₂₄(OH)₄·nH₂O {x = 1-2}{n = 7-11} |
| 88 | Tamait | (Ca,K,Ba,Na)₃₋₄Mn²⁺₂₄[(OH)₁₂\|{(Si,Al)₄(O,OH)₁₀}₁₀]·21H₂O |
| 89 | Ekmanit | (Fe²⁺,Mg,Mn,Fe³⁺)₃(Si,Al)₄O₁₀(OH)₂·2H₂O |
| 90 | Lunijianlait | Li_{0.7}Al_{6.2}(Si₇AlO₂₀)(OH,O)₁₀ |
| 91 | Saliotit | Na_{0.5}Li_{0.5}Al₃[(OH)₅\|AlSi₃O₁₀] |
| 92 | Kulkeit | Na_{0.35}Mg₈Al(AlSi₇)O₂₀(OH)₁₀ |
| 93 | Aliettit | Ca_{0.2}Mg₆(Si,Al)₈O₂₀(OH)₄·4H₂O |
| 94 | Rectorit | (Na,Ca)Al₄(Si,Al)₈O₂₀(OH)₄·2H₂O |
| 95 | Tarasovit | (Na,K,H₃O,Ca)₂Al₄[(OH)₂\|(Si,Al)₄O₁₀]₂·H₂O |
| 96 | Tosudit | Na_{0.5}(Al,Mg)₆(Si,Al)₈O₁₈(OH)₁₂·5H₂O |
| 97 | Corrensit | (Ca,Na,K)(Mg,Fe,Al)₉(Si,Al)₈O₂₀(OH)₁₀·nH₂O |
| 98 | Brinrobertsit | (Na,K,Ca)_{0.3}(Al,Fe,Mg)₄(Si,Al)₈O₂₀(OH)₄·3.5H₂O |
| 99 | Montmorillonit | (Na,Ca)_{0.3}(Al,Mg)₂Si₄O₁₀(OH)₂·nH₂O |
| 100 | Beidellit | (Na,Ca_{0.5})_{0.3}Al₂(Si,Al)₄O₁₀(OH)₂·4H₂O |
| 101 | Nontronit | Na_{0.3}Fe₂³⁺(Si,Al)₄O₁₀(OH)₂·4H₂O |
| 102 | Volkonskoit | Ca_{0.3}(Cr³⁺,Mg,Fe³⁺)₂(Si,Al)₄O₁₀(OH)₂·4H₂O |
| 103 | Swinefordit | (Ca,Na)_{0.3}(Al,Li,Mg)₂(Si,Al)₄O₁₀(OH,F)₂·2H₂O |
| 104 | Yakhontovit | (Ca,Na,K)_{0.3}(CuFe²⁺M₉)₂Si₄O₁₀(OH)₂·3H₂O |
| 105 | Hectorit | Na_{0.3}(Mg,Li)₃Si₄O₁₀(F,OH)₂ |
| 106 | Saponit | (Ca\|₂,Na)_{0.3}(Mg,Fe²⁺)₃(Si,Al)₄O₁₀(OH)₂·4H₂O |
| 107 | Ferrosaponit | Ca_{0.3}(Fe²⁺,Mg,Fe³⁺)₃[(OH)₂\|(Si,Al)Si₃O₁₀]·4H₂O |
| 108 | Spadait | MgSiO₂(OH)₂·H₂O |
| 109 | Stevensit | (Ca\|₂)_{0.3}Mg₂Si₄O₄₀(OH)₂ |
| 110 | Sauconit | Na_{0.3}Zn₃(Si,Al)₄O₁₀(OH)₂·4H₂O |
| 111 | Zinksilit | Zn₃Si₄O₁₀(OH)₂·4H₂O |
| 112 | Vermiculit | Mg_{0.7}(Mg,Fe,Al)₆(Si,Al)₈O₂₀(OH)₄·8H₂O |
| 113 | Rilandit | (Cr³⁺,Al)₆SiO₁₁·5H₂O |
| 114 | Donbassit | Al_{2.3}[(OH)₈/AlSi₃O₄₀] |
| 115 | Sudoit | Mg₂Al₃(Si₃Al)O₁₀(OH)₃ |
| 116 | Klinochlor | (Mg,Fe²⁺)₅Al(SbAl)O₁₀(OH)₈ |
| 117 | Chamosit | (Fe²⁺,Mg,Fe³⁺)₅Al(Si₃Al)O₁₀(OH,O)₈ |
| 118 | Orthochamosit | (Fe²⁺,Mg,Fe³⁺)₅Al(Si₃Al)O₁₀(OH,O)₈ |
| 119 | Baileychlor | (Zn,Fe²⁺,Al,Mg)₆(Si,Al)₄O_{,10}(OH)₈ |
| 120 | Pennantit | Mn²⁺₅Al(Si₃Al)O₁₀(OH)₈ |
| 121 | Nimit | (Ni,Mg,Fe²⁺)₅Al(Si₃Al)O₁₀(OH)₈ |
| 122 | Gonyerit | Mn²⁺₅Fe³⁺(Si₃Fe³⁺O₁₀)(OH)₈ |
| 123 | Cookeit | LiAl₄(Si₃Al)O₁₀(OH)₈ |
| 124 | Borocookeit | Li_{1-1.5}Al_{4-3.5}[(OH,F)₃\|(B,Al)Si₃O₁₀] |
| 125 | Manandonit | Li₂Al₄[(Si₂AlB)O₁₀](OH)₈ |
| 126 | Franklinfurnaceit | Ca₂(Fe³⁺Al)Mn³⁺Mn₃²⁺Zn₂Si₂O₁₀(OH)₈ |
| 127 | Kämmererit(Var.v. Klinochlor) | Mg₅(Al,Cr)₂Si₃O₁₀(OH)₈ |
| 128 | Niksergievit | (Ba,Ca)₂Al₃[(OH)₆\|CO₃\|(Si, Al)₄O₁₀]·0.2 H₂O |
| 129 | Surit | Pb₂Ca(Al,Mg)₂(Si,Al)₄O₄₀(OH)₂(CO₃,OH)₃:0.5 H₂O |
| 130 | Ferrisurit | (Pb,Ca)₂₋₃(Fe³⁺,Al)₂[(OH,F)_{2.5-3}\|(CO₃)_{1.5-2}\|Si₄O₁₀]·0.5 H₂O |
| 131 | Kaolinit | Al₂Si₂O₅(OH)₄ |
| 132 | Dickit | Al₂Si₂O₅(OH)₄ |
| 133 | Halloysit-7Å | Al₂Si₂O₅(OH)₄ |
| 134 | Sturtit | Fe³⁺(Mn²⁺,Ca,Mg)Si₄O₁₀(OH)₃·10 H₂O |
| 135 | Allophan | Al₂O₃·(SiO₂)_{1.3-2}·(H₂O)_{2.5-3} |
| 136 | Imogolith | Al₂SiO₃(OH)₄ |
| 137 | Odinit | (Fe³⁺,Mg,Al,Fe²⁺,Ti,Mn)_{2.4}(Si_{1.8}Al_{0.2})O₅(OH)₄ |
| 138 | Hisingerit | Fe₂³⁺Si₂O₅(OH)₄·2H₂O |
| 139 | Neotokit | (Mn,Fe²⁺)SiO₃·H₂O |
| 140 | Chrysotil | Mg₃Si₂O₅(OH)₄ |
| 141 | Klinochrysotil | Mg₃Si₂O₅(OH)₄ |
| 142 | Maufit | (Mg,Ni)Al₄Si₃O₁₃·4H₂O |
| 143 | Orthochrysotil | Mg₃Si₂O₅(OH)₄ |
| 144 | Parachrysotil | Mg₃Si₂O₅(OH)₄ |
| 145 | Antigorit | (Mg,Fe²⁺)₃Si₂O₅(OH)₄ |
| 146 | Lizardit | Mg₃Si₂O₅(OH)₄ |
| 147 | Karyopilit | Mn²⁺₃Si₂O₅(OH)₄ |
| 148 | Greenalith | (Fe²⁺,Fe³⁺)₂₋₃Si₂O₅(OH)₄ |
| 149 | Berthierin | (Fe²⁺,Fe³⁺,Al)₃(Si,Al)₂O₅(OH)₄ |
| 150 | Fraipontit | (Zn,Al)₃(Si,Al)₂O₅(OH)₄ |
| 151 | Zinalsit | Zn₇Al₄(SiO₄)₆(OH)₂·9H₂O |
| 152 | Dozyit | Mg₇(Al,Fe³⁺,Cr)₂[(OH)₁₂\|Al₂Si₄O₁₅] |
| 153 | Amesit | Mg₂Al(SiAl)O₅(OH)₄ |
| 154 | Kellyit | (Mn²⁺,Mg,Al)₃(Si,Al)₂O₅(OH)₄ |
| 155 | Cronstedtit | Fe₂²⁺Fe³⁺(SiFe³⁺)O₅(OH)₄ |
| 156 | Karpinskit | (Mg,Ni)₂Si₂O₅(OH)₂ |
| 157 | Nepouit | (Ni,Mg)₃Si₂O₅(OH)₄ |
| 158 | Pecorait | Ni₃Si₂O₅(OH)₄ |
| 159 | Brindleyit | (Ni,Mg,Fe²⁺)₂Al(SiAl)O₅(OH)₄ |
| 160 | Carlosturanit | (Mg,Fe²⁺,Ti)₂₁(Si,Al)₁₂O₂₈(OH)₃₄·H₂O |
| 161 | Pyrosmalith-(Fe) | (Fe²⁺,Mn)₈Si₆O₁₅(Cl,OH)₁₀ |
| 162 | Pyrosmalith-(Mn) | (Mn,Fe²⁺)₈Si₆O₁₅(OH,Cl)₁₀ |
| 163 | Brokenhillit | (Mn,Fe)₈Si₆O₁₅(OH,Cl)₁₀ |
| 164 | Nelenit | (Mn,Fe²⁺)₁₆Si₁₂As³⁺₃O₃₆(OH)₁₇ |
| 165 | Schallerit | (Mn²⁺,Fe²⁺)₁₆Si₁₂As³⁺₃O₃₆(OH)₁₇ |
| 166 | Friedelit | Mn²⁺ ₈Si₆O₁₅(OH,Cl)₁₀ |
| 167 | Mcgillit | Mn²⁺₈Si₆O₁₅(OH)₈Cl₂ |
| 168 | Bementit | Mn₇Si₆O₁₅(OH)₈ |
| 169 | Varennesit | Na₈(Mn,Fe³⁺,Ti)₂[(OH,Cl)₂\|(Si₂O₅)₅]·12H₂O |
| 170 | Naujakasit | Na₆(Fe²⁺,Mn)Al₄Si₈O₂₆ |
| 171 | Manganonaujakasit | Na₆(Mn²⁺,Fe²⁺)Al₄[Si₈O₂₆] |
| 172 | Spodiophyllit | (Na,K)₄(Mg,Fe²⁺)₃(Fe³⁺,Al)₂(Si₈O₂₄) |
| 173 | Sazhinit-(Ce) | Na₂CeSi₆O₁₄(OH)·nH₂O |
| 174 | Sazhinit-(La) | Na₃La[Si₆O₁₅]·2H₂O |
| 175 | Burckhardtit | Pb₂(Fe³⁺Te⁶⁺)[AlSi₃O₈]O₆ |
| 176 | Tuperssuatsiait | Na₂(Fe³⁺,Mn²⁺)₃Si₈O₂₀(OH)₂·4H₂O |
| 177 | Palygorskit | (Mg,Al)₂Si₄O₁₀(OH)·4H₂O |
| 178 | Yofortierit | Mn²⁺₅Si₈O₂₀(OH)₂·7H₂O |
| 179 | Sepiolith | Mg₄Si₆O₁₅(OH)₂·6H₂O |
| 180 | Falcondoit | (Ni,Mg)₄Si₆O₁₅(OH)₂·6H₂O |
| 181 | Loughlinit | Na₂Mg₃Si₆O₁₆·8H₂O |
| 182 | Kalifersit | (K,Na)₅Fe7³⁺[(OH)₃\|Si₁₀O₂₅]₂·12H₂O |
| 183 | Minehillit | (K,Na)₂₋₃Ca₂₈(Zn₄Al₄Si₄₀)O₁₁₂(OH)₁₆ |
| 184 | Truscottit | (Ca,Mn)₁₄Si₂₄O₅₈(OH)₈·2H₂O |
| 185 | Orlymanit | Ca₄Mn₃²⁺Si₈O₂₀(OH)₆·2H₂O |
| 186 | Fedorit | (Na,K)₂₋₃(Ca,Na)₇[Si₄O₈(F,Cl,OH)₂\|(Si₄O₁₀)₃]·3.5H₂O |
| 187 | Reyerit | (Na,K)₄Ca₁₄Si₂₂Al₂O₅₈(OH)₈·6H₂O |
| 188 | Gyrolith | NaCa₁₆Si₂₃AlO₆₀(OH)₈·14H₂O |
| 189 | Tungusit | Ca₁₄Fe₉²⁺[(OH)₂₂\|(Si₄O₁₀)₆] |
| 190 | Zeophyllit | Ca₄Si₃O₈(OH,F)₄·2H₂O |
| 191 | Armstrongit | CaZr(Si₆O₁₅)·3 H₂O |
| 192 | Jagoit | Pb₁₈Fe³⁺₄[Si₄(Si,Fe³⁺)₆][Pb₄Si₁₆(Si,Fe)₄]O₈₂Cl₆ |
| 193 | Hyttsjöit | Pb₁₈Ba₂Ca₅Mn₂²⁺Fe₂³⁺[Cl\|(Si₁₅O₄₅)₂]·6H₂0 |
| 194 | Maricopait | Ca₂Pb₇(Si₃₆,Al₁₂)(O,OH)₉₉·n(H₂O,OH) |
| 195 | Cavansit | Ca(VO)Si₄O₁₀·4H₂O |
| 196 | Pentagonit | Ca(VO)Si₄O₁₀·4H₂O |
| 197 | Weeksit | (K,Ba)₂[(UO₂)₂\|Si₅O₁₃]·4H₂O |
| 198 | Coutinhoit | Th_{0.5}(UO₂)₂Si₅O₁₃·3H₂O |
| 199 | Haiweeit | Ca[(UO₂)₂\|Si₅O₁₂(OH)₂]·6H₂O |
| 200 | Metahaiweeit | Ca(UO₂)₂Si₆O₁₅·nH₂O |
| 201 | Monteregianit-(Y) | KNa₂YSi₃O₁₉·5H₂O |
| 202 | Mountainit | KNa₂Ca₂[Si₈O₁₉(OH)]·6H₂O |
| 203 | Rhodesit | KHCa₂Si₃O₁₉·5H₂O |
| 204 | Delhayelith | K₇Na₃Ca₅Al₂Si₁₄O₃₈F₄Cl₂ |
| 205 | Hydrodelhayelith | KCa₂AlSi₇O₁₇(OH)₂·6H₂O |
| 206 | Macdonaldit | BaCa₄Si₁₆O₃₆(OH)₂·10H₂O |
| 207 | Cymrit | Ba(Si,Al)₄(O,OH)₈·H₂O |
| 208 | Kampfit | Ba₁₂(Si₁₁Al₅)O₃₁(CO₃)₈Cl₅ |
| 209 | Lourenswalsit | (K,Ba)₂(Ti,Mg,Ca,Fe)₄(Si,Al,Fe)₆O₁₄(OH)₁₂ |
| 210 | Tienshanit | (Na,K)₉₋₁₀(Ca,Y)₂Ba₆(Mn²⁺,Fe²⁺,Ti⁴⁺,Zn)₆(Ti,Nb) [(O,F,OH)₁₁\|B₂O₄\|Si₆O₁₅]₆ |
| 211 | Wickenburgit | Pb₃CaAl[Si₁₀O₂₇]·3H₂O |
| 212 | Silhydrit | Si₃O₆·H₂O |
| 213 | Magadiit | Na₂Si₁₄O₂₉·11H₂O |
| 214 | Strätlingit | Ca₂Al[(OH)₆AlSiO₂(OH)₄]·2.5 H₂O |
| 215 | Vertumnit | Ca₄Al₄Si₄O₆(OH)₂₄·3H₂O |
| 216 | Zussmanit | K(Fe²⁺,Mg,Mn)₁₃(Si,Al)₁₈O₄₂(OH)₁₄ |
| 217 | Coombsit | K(Mn²⁺,Fe²⁺,Mg)₁₃[(OH)₇\|(Si,Al)₃O₃\|Si₆O₁₈]₂ |

a) vgl. Mineralienatlas, Mineralklasse VIII/H - Schichtsilikate (Phyllosilikate), Strunz 8 Systematik
   Ganz besonders bevorzugt wird Bentonit aus der Gruppe der Montmorillonite ((Na,Ca)_{0.3}(Al,Mg)₂Si₄O₁₀(OH)₂·nH₂O) verwendet. Bentonit ist eine Mischung aus verschiedenen Tonmineralien und enthält als wichtigsten Bestandteil Montmorillonit. Natrium-Bentonit kann ein Vielfaches seines eigenen Trockengewichtes an Wasser aufnehmen. Des Weiteren kann Calciumbentonit Fette und/oder Öle aufnehmen.

**Die vorstehend** beschriebenen Schichtsilikat-Mikro- und/oder -Nanopartikel sind funktionalisiert, nicht funktionalisiert, aggregiert, nicht aggregiert, agglomeriert, nicht agglomeriert, geträgert und/oder nicht geträgert. Beispielsweise können sie funktionalisiert, agglomeriert und geträgert sein. Sie können aber auch nicht funktionalisiert und aggregiert sein.

Sie können katalytisch wirken und/oder die Dehalogenierung unterstützen.

Weitere geeignete Beispiele von Zusatzstoffen sind Heteropolysäuren und Isopolysäuren sowie ihre Isomere, Defektstrukturen und Teilstrukturen, zusammenfassend Polyoxometallate (POM) genannt, in der Form ihrer Moleküle mit einem größten Moleküldurchmesser ≤ 2 nm, vorzugsweise ≤ 1,5 nm und insbesondere ≤ 1 nm, zusammenfassend POM-Moleküle genannt sowie in der Form von Mikropartikeln und Nanopartikeln einer mittleren Teilchengröße von 1 nm bis < 1000 µm, vorzugsweise 2 nm bis 500 µm, bevorzugt 5 nm bis 250 µm, besonders bevorzugt 5 nm bis 150 µm und insbesondere 5 nm bis 100 µm. Im Folgenden werden sie je nachdem als »POM-Mikropartikel oder POM-Nanopartikel« bezeichnet.

Es sei betont, dass die Angaben ≤ 2 nm, ≤ 1,5 nm und ≤ 1 nm keinen Moleküldurchmesser von 0 nm umfassen, sondern dass die untere Grenze des Moleküldurchmessers gleich dem größten Durchmesser des kleinsten existierenden POM-Moleküls ist.

Die mithilfe der Transmissionselektromikroskopie (TEM), Rasterelektronenmikroskopie (REM), Rastertransmissionselektromikroskopie (RTEM), Rasterkraftmikroskopie (AFM) oder Rastertunnelmikroskopie (TRM) gemessene mittlere Teilchengröße der erfindungsgemäß zu verwendenden POM-Mikropartikel und POM-Nanopartikel kann sehr breit variieren und hervorragend den Erfordernissen des Einzelfalls angepasst werden.

Die die POM-Mikropartikel und POM Nanopartikeln können die unterschiedlichsten Morphologien und geometrischen Formen aufweisen, so dass sie auch in dieser Hinsicht hervorragend den Erfordernissen des Einzelfalls angepasst werden können.

So können sie kompakt sein sowie mindestens einen Hohlraum und/oder eine Kern-Schale-Struktur, wobei der Kern und die Schale aus unterschiedlichen Materialien aufgebaut sein können, aufweisen. Sie können auch unterschiedliche geometrische Formen wie Kugeln, Ellipsoide, Würfel, Quader, Pyramiden, Kegel, Zylinder, Rhomben, Dodekaeder, abgestumpfte Dodekaeder, Ikosaeder, abgestumpfte Ikosaeder, Hanteln, Tori, Plättchen oder Nadeln mit kreisförmigem, ovalen, elliptischen, quadratischen, dreieckigen, viereckigen, fünfeckigen, sechseckigen, siebeneckigen, achteckigen oder sternförmigen (drei-, vier-, fünf- oder mehrzackig) Umriss haben. Dabei können gegebenenfalls vorhandene Kanten und Ecken abgerundet sein. Es können sich auch zwei oder mehr POM-Mikropartikel und/oder POM-Nanopartikel unterschiedlicher Morphologie und/oder geometrischer Form zusammenlagern. Beispielsweise können kugelförmige POM-Mikropartikel und/oder POM-Nanopartikel spitze Auswüchse in Kegelform haben. Oder zwei oder drei zylinderförmige POM-Mikropartikel und/oder POM-Nanopartikel können sich derart zusammenlagern, dass sie ein T-förmiges oder Y-förmiges Teilchen bilden. Des Weiteren kann ihre Oberfläche Vertiefungen aufweisen, so dass die POM-Mikropartikel und/oder POM-Nanopartikel eine erdbeer-, himbeer- oder brombeerförmige Morphologie haben. Nicht zuletzt können die Hanteln, Tori, Nadeln oder Plättchen in mindestens einer Richtung des Raumes gebogen sein.

Der Durchmesser der POM-Mikropartikel und POM-Nanopartikel kann sehr breit variieren und daher hervorragend den Erfordernissen des Einzelfalls angepasst werden.

Im Rahmen der vorliegenden Erfindung ist der Durchmesser der erfindungsgemäß zu verwendenden POM-Mikropartikel und/oder POM-Nanopartikel, die keine Kugelform aufweisen, gleich der längsten, durch die jeweiligen POM-Mikropartikel und POM-Nanopartikel gelegten Strecke.

Vorzugsweise liegt der Durchmesser erfindungsgemäß bevorzugten Nanopartikel bei 1 nm bis <1000 µm, vorzugsweise 2 nm bis 500 µm, bevorzugt 5 nm bis 250 µm, besonders bevorzugt 5 nm bis 150 µm und insbesondere 5 nm bis 100 µm.

Die elementare Zusammensetzung und die Struktur der POM können ebenfalls sehr breit variieren.

Bekannt ist beispielsweise die Einteilung der POM in die folgenden Strukturen:
- das Lindquist-Hexamolybdatanion, Mo₆O₁₉²⁻,
- das Decavanadatanion, V₁₀O₂₈⁶⁻,
- das Paratungstatanion B, H₂W₁₂O₄₂¹⁰⁻,
- Mo₃₆-Polymolybdate, Mo₃₆O₁₁₂(H₂O)⁸⁻,
- die Strandberg-Struktur, HP₂Mo₅O₂₃⁴⁻,
- die Keggin-Struktur, XM₁₂O₄₀ⁿ⁻,
- die Dawson-Struktur, X₂M₁₈O₆₂ⁿ⁻,
- die Anderson-Struktur, XM₆O₂₄ⁿ⁻,
- die Allman-Waugh-Struktur, X₁₂M₁₈O₃₂ⁿ⁻,
- die Weakley-Yamase- Struktur, XM₁₀O₃₆ⁿ⁻, und
- die Dexter-Silverton-Struktur, XM₁₂O₄₂ⁿ⁻.

Die Hochzahl n ist hier eine ganze Zahl von 3 bis 20 bezeichnet die Wertigkeit eines Anions, die in Abhängigkeit von den Variablen X und M variiert.

Als ein weiteres Ordnungsprinzip für POM können die Formeln I bis XIII dienen:
- (BW₁₂O₄₀)⁵⁻ (I),
- (W₁₀O₃₂)⁴⁻ (II),
- (P₂W₁₈O₆₂)⁶⁻ (III),
- (PW₁₁O₃₉)⁷⁻ (IV),
- (SiW₁₁O₃₉)⁸⁻ (V),
- (HSiW₉O₃₄)⁹⁻ (VI),
- (HPW₉O₃₄)⁸⁻ (VII),
- (TM)₄(PW₉O₃₄)^{t-} (VIII),
- (TM)₄(P₂W₁₅O₅₆)₂^{t-} (IX),
- (NaP₅W₃₀O₁₁₀)¹⁴⁻ (X),
- (TM)₃(PW₉O₃₄)₂¹²⁻ (XI) und
- (P₂W₁₈O₆)⁶⁻ (XII).

In den Formeln I bis XII steht TM für ein zweiwertiges oder dreiwertiges Übergangsmetallion wie Mn²⁺, Fe²⁺, Fe³⁺, Co²⁺, Co³⁺, Ni²⁺, Cu²⁺ und Zn²⁺. Die Hochzahl t ist eine ganze Zahl und bezeichnet die Wertigkeit eines Anions, die in Abhängigkeit von der Wertigkeit der Variable TM variiert.

Des Weiteren kommen POM der allgemeinen Formel XIII in Betracht:

- (AₓGa_{y}NbₐO_{b})^{z-} (XIII).

In der Formel XIII steht die Variable A für Phosphor, Silicium oder Germanium und der Index x steht für 0 oder für eine ganze Zahl von 1 bis 40. Der Index y steht für eine ganze Zahl von 1 bis 10, der Index a steht für eine ganze Zahl von 1 bis 8 und der Index b ist eine ganze Zahl von 15 bis 150. Die Hochzahl z variiert in Abhängigkeit von der Natur und dem Oxidationsgrad der Variable A. Es kommen auch die Aquakomplexe und die aktiven Fragmente der POM XIII in Betracht.

Wenn der Index x gleich 0 ist, ist y bevorzugt gleich 6-a, wobei der Index a gleich einer ganzen Zahl von 1 bis 5 ist und der Index b gleich 19 ist.

Wenn die Variable A gleich Silicium oder Germanium ist, ist der Index x gleich 2, der Index y gleich 18, der Index a gleich 6 und der Index b gleich 77.

Wenn die Variable A gleich P ist, ist der Index x gleich 2 oder 4, der Index y gleich 12, 15, 17 oder 30, der Index a gleich 1, 3 oder 6 und der Index b gleich 62 oder 123.

Außerdem die Isomere der POM in Betracht. So hat die Keggin-Struktur fünf Isomere, die alpha, beta, gamma, delta, und epsilon-Struktur. Des Weiteren kommen Defektstrukturen oder lacunare Strukturen sowie Teilstrukturen in Betracht.

Vorzugsweise werden die Anionen I bis XIII in der Form von Salzen mit Kationen, die für die Reinigung und Körperpflege und die pharmazeutische Anwendung zugelassen sind, angewandt.

Beispiele geeigneter Kationen sind
- H⁺, Na⁺, K⁺ und NH₄⁺,
- Mono-, Di-, Tri- oder Tetra-(C₁-C₂₀-alkylammonium) wie Pentadecyldimethylferrocenylmethylammonium, Undecyldimethylferrocenylmethylammonium, Hexadecyltrimethylammonium, Octadecyltrimethylammonium, Didodecyldimethylammonium, Ditetradecyldimethylammonium, Dihexadecyl-dimethylammonium, Dioctadecyldimethylammonium, Dioctadecylviologen, Trioctadecylmethylammonium und Tetrabutylammonium,
- Mono-, Di-, Tri- oder Tetra-(C₁-C₂₀-alkanolammonium) wie Ethanolammonium Diethanolammonium und Triethanolammonium
- Monokationen natürlich vorkommender Aminosäuren wie Histidinium (HISH⁺), Argininium (ARGH⁺) oder Lysinium (LYSH⁺) oder Oligo- oder Polypeptide mit einem oder mehreren protonierten basischen Aminosäurerest(en).

### [Vgl. US 6,020,369, Spalte 3, Zeile 6, bis Spalte 4, Zeile 29]

Es kommen auch natürliche, modifizierte natürliche und synthetische kationische Oligomere und Polymere, d.h., Oligomere und Polymere, die primäre, sekundäre, tertiäre und quartäre Ammoniumgruppen, primäre, sekundäre und tertiäre Sulfoniumgruppen und/oder primäre, sekundäre und tertiäre Phosphoniumgruppen tragen. Synthetische Oligomere und Polymere sind üblich und bekannt und werden beispielsweise in Elektrotauchlacken verwendet. Beispiele für natürliche kationische Oligomere und Polymere sind Polyaminoaccharide wie Polyglucosamine, insbesondere Chitosan.

Beispiele geeigneter POM gehen aus der Tabelle 2 hervor.

**Tabelle 2: Summenformeln von geeigneten POM**

| **Nr.** | **Summenformel** | **Strukturfamilie** |
|---|---|---|
| 1 | [(NMP)₂H]₃PW₁₂O₄₀ | |
| 2 | [(DMA)₂H]₃PMO₁₂O₄₀ | |
| 3 | (NH₄)₁₇Na[NaSb₉W₂₁O₈₆] | **Anorganisches Kryptat** |
| 4 | a- und b-H₅BW₁₂O₄₀ | " |
| 5 | a- und b-H₆ZnW₁₂O₄₀ | " |
| 6 | a- und b-H₆P₂W₁₈O ₆₂ | " |
| 7 | alpha-(NH₄)₆P₂W₁₈O₆₂ | **Wells-Dawson-Struktur** |
| 8 | K₁₀Cu₄(H₂O)₂(PW₉O₃₄)₂.20H₂O | " |
| 9 | K₁₀Co₄(H₂O)₂(PW₉O₃₄)₂.20H₂O | " |
| 10 | Na₇PW₁₁O₃₉ | " |
| | Na₇PW₁₁O₃₉.20H₂O + 2 C₅H₄P(O)(OH)₂ | " |
| 11 | [(n-Butyl)₄N]₄H₃PW₁₁O₃₉ | " |
| 12 | b-Na₈HPW₉O₃₄ | " |
| 13 | [(n-Butyl)₄N]₃PMoW₁₁O₃₉ | " |
| 14 | a-[(n-Butyl)₄N]₄Mo8O26 | " |
| 15 | [(n-Butyl)₄N]₂W₆O₁₉ | " |
| 16 | [(n-Butyl)₄N]₂Mo₆O₁₉ | " |
| 17 | a-(NH₄)ₙH₍₄₋ₙ₎SiW₁₂O₄₀ | " |
| 18 | a-(NH₄)ₙH₍₅₋ₙ₎BW₁₂O₄₀ | " |
| 19 | a-K₅BW₁₂O₄₀ | " |
| 20 | K₄W₄O₁₀(O₂)₆ | " |
| 21 | b-Na₉HSiW₉O₃₄ | " |
| 22 | Na₆H₂W₁₂O₄₀ | |
| 23 | (NH₄)₁₄[NaP₅W₃₀O₁₁₀] | Preyssler-Struktur |
| 24 | a-(NH₄)₅BW₁₂O₄₀ | " |
| 25 | a-Na₅BW₁₂O₄₀ | " |
| 26 | (NH₄)₄W₁₀O₃₂ | " |
| 27 | (Me₄N)₄W₁₀O₃₂ | " |
| 28 | (HISH⁺)ₙH₍₅₋ₙ₎BW₁₂O₄₀ | " |
| 29 | (LYSH⁺)ₙH₍₅₋ₙ₎BW₁₂O₄₀ | " |
| 30 | (ARGH⁺)ₙH₍₅₋ₙ₎BW₁₂O₄₀ | " |
| 31 | (HISH⁺)ₙH₍₄₋ₙ₎SiW₁₂O₄₀ | " |
| 32 | (LYS⁺)ₙH₍₄₋ₙ₎SiW₁₂O₄₀ | " |
| 34 | (ARGH⁺)ₙH₍₄₋ₙ₎SiW₁₂O₄₀ | " |
| 35 | K₁₂[EuP₅W₃₀O₁₁₀].22H₂O^{b)} | " |
| 36 | a-K₈SiW₁₁O₃₉ | " |
| 37 | K₁₀(H₂W₁₂O₄₂) | " |
| 38 | K₁₂Ni₃(II)(PW₉O₃₄)₂.nH₂O | " |
| 39 | (NH₄)₁₀Co₄(II)(PW₉O₃₄)_{2.}nH₂O | " |
| 40 | K₁₂Pd₃(II)(PW₉O₃₄)_{2.}nH₂O | " |
| 41 | Na₁₂P₂W₁₅O_{56.}18H₂O | Lacunare (defekte) Struktur |
| 42 | Na₁₆Cu₄(H₂O)₂(P₂W₁₅O₅₆)₂.nH₂O | " |
| 43 | Na₁₆Zn₄(H₂OMP₂W₁₅O₅₆)₂.nH₂O | " |
| 44 | Na₁₆Co₄(H₂O)₂(P₂W₁₅O₅₆)₂.nH₂O | " |
| 45 | Na₁₆Ni₄(H₂O)₂(P₂W₁₅O₅₆)₂.NH₂O | Wells-Dawson-Sandwich-Struktur |
| 46 | Na₁₆Mn₄(H₂O)₂(P₂W₁₅O₅₆)₂.nH₂O | " |
| 47 | Na₁₆Fe₄(H₂O)₂(P₂W₁₅O₅₆)_{2.}nH₂O | " |
| 48 | K₁₀Zn₄(H₂O)₂(PW₉O₃₄)₂.20H₂O | Keggin-Sandwich-Struktur |
| 49 | K₁₀Ni₄(H₂O)₂(PW₉O₃₄)₂.nH₂O | " |
| 50 | K₁₀Mn₄(H₂O)₂(PW₉O₃₄)₂.nH₂O | " |
| 51 | K₁₀Fe₄(H₂O)₂(PW₉O₃₄)₂.nH₂O | " |
| 52 | K₁₂Cu₃(PW₉O₃₄)₂.nH₂O | " |
| 53 | K₁₂(CoH₂O)₃(PW₉O₃₄)₂.nH₂O | " |
| 54 | K₁₂Zn₃(PN₉O₃₄)₂.15H₂O | " |
| 55 | K₁₂Mn₃(PW₉O₃₄)₂.15H₂O | " |
| 56 | K₁₂Fe₃(PW₉O₃₄)₂.25H₂O | " |
| 57 | (ARGH⁺)₁₀(NH₄)₇Na[NaSb₉W₂₁O₈₆] | " |
| 58 | (ARGH⁺)₅HW₁₁O₃₉.17H₂O | " |
| 59 | K₇Ti₂W₁₀O₄₀ | " |
| 60 | [(CH₃)₄N]₇Ti₂W₁₀O₄₀ | " |
| 61 | Cs₇Ti₂W₁₀O₄₀ | " |
| 62 | [HISH⁺]₇Ti₂W₁₀O₄₀ | " |
| 63 | [LYSH⁺]ₙNa₇₋ₙPTi₂W₁₀O₄₀ | " |
| 64 | [ARGH⁺]ₙNa₇₋ₙPTi₂W₁₀O₄₀ | " |
| 65 | [n-Butyl₄N⁺]₃H₃V₁₀O₂₈ | " |
| 66 | K₇HNb₆O₁₉.13H2O | " |
| 67 | [(CH₃)₄N⁺]₄SiW₁₁O₃₉-O[SiCH₂CH₂C(O)OCH₃]₂ | **Organisch modifizierte Struktur** |
| 68 | [(CH₃)₄N⁺]₄PW₁₁O₃₉-(SiCH₂CH₂CH₂CN) | " |
| 69 | [(CH₃)₄N⁺]₄PW₁₁O₃₉-(SiCH₂CH₂CH₂Cl) | " |
| 70 | [(CH₃)₄N⁺]₄PW₁₁O₃₉-(SiCH₂=CH₂) | " |
| 71 | Cs₄[SiW11O₃₉-(SiCH₂CH₂C(O)OCH₃)₂^{]}₄ | " |
| 72 | Cs₄[SiW11O₃₉-(SiCH₂CH₂CH₂CN)]₄ | " |
| 73 | Cs₄[SiW11O₃₉-(SiCH₂CH₂CH₂Cl)₂]₄ | " |
| 74 | Cs₄[SiW11O₃₉-(SiCH₂=CH₂)]₄ | " |
| 75 | [(CH₃)₄N⁺]₄SiW₁₁O₃₉-O-(SiCH₂CH₂CH₂Cl)₂ | " |
| 76 | [(CH₃)₄N⁺]₄SiW₁₁O₃₉-O(SiCH₂CH₂CH₂CN)₂ | " |
| 77 | [(CH₃)₄N⁺]₄SiW₁₁O₃₉-O(SiCH₂=CH₂)₂ | " |
| 78 | [(CH₃)₄N⁺]₄SiW₁₁O₃₉-O[SiC(CH₃)]₂ | " |
| 79 | [(CH₃)₄N⁺]₄SiW₁₁O₃₉-O[SiCH₂CH(CH₃)]₂ | " |
| 80 | [(CH₃)₄N⁺]₄SiW₁₁O₃₉-O[SiCH₂CH₂C(O)OCH₃]₂ | " |
| 81 | K₅Mn(II)PW₁₁O₃₉.NnH₂O | **Mit Übergangsmetallen substituierte Struktur** |
| 82 | K₈Mn(II)P₂W₁₇O₆₁.nH₂O | " |
| 83 | K₆Mn(II)SiW₁₁O₃₉.nH₂O | " |
| 84 | K₅PW₁₁O₃₉[Si(CH₃)₂].nH₂O | " |
| 85 | K₃PW₁₁O₄₁(PC₆H₅)₂.nH₂O | " |
| 86 | Na₃PW₁₁O₄₁(PC₆H₅)₂.nH₂O | " |
| 87 | K₅PTiW₁₁O₄₀ | " |
| 88 | Cs₅PTIW₁₁O₃₉ | " |
| 89 | K₆SiW₁₁O₃₉[Si(CH₃)₂].nH₂O | " |
| 90 | KSiW₁₁O₃₉[Si(C₆H₅)(tert.-C₄H₉)].nH₂O | " |
| 91 | K₆SiW₁₁O₃₉[Si(C₆H₅)₂].nH₂O | " |
| 92 | K₇SiW₉Nb₃O₄₀.nH₂O | " |
| 93 | Cs₇SiW₉Nb₃O₄₀.nH₂O | " |
| 94 | Cs₈Si₂W₁₈Nb₆O₇₇.nH₂O | " |
| 95 | ((CH₃)₃NH⁺]₇SiW₉Nb₃O₄₀.nH₂O | **Substituierte Keggin-Struktur** |
| 96 | (CN₃H₆)₇SiW₉Nb₃O₄₀.NH₂O | **"** |
| 97 | (CN₃H₆)₈Si₂W₁₈Nb₆O₇₇.nH₂O | " |
| 98 | Rb₇SiW₉Nb₃O₄₀.nH₂O | " |
| 99 | Rb₈Si₂W₁₈Nb₆O₇₇.nH₂O | " |
| 100 | K₈Si₂W₁₈Nb₆O₇₇.nH₂O | " |
| 101 | K₆P₂Mo₁₈O₆₂.nH₂O | " |
| 102 | (C₅H₅N)₇HSi₂W₁₈Nb₆O₇₇.nH₂O | " |
| 103 | (C₅H₅N)₇SiW₉Nb₃O₄₀.nH₂O | " |
| 104 | (ARGH⁺)₈SiW₁₈Nb₆O₇₇.18H₂O | " |
| 105 | (LYSH⁺)₇KSiW₁₈Nb₆O₇₇.18H₂O | " |
| 106 | (HISH⁺)₆K₂SiW₁₈Nb₆O₇₇.18H₂O | " |
| 107 | [(CH₃)₄N⁺]₄SiW₁₁O₃₉-O(SiCH₂CH₃)₂ | " |
| 108 | [(CH₃)₄N⁺]₄SiW₁₁O₃₉-O(SiCH₃)₂ | " |
| 109 | ((CH₃)₄N⁺]₄SiW₁₁O₃₉-O(SiC₁₆H₃₃)₂ | " |
| 110 | Li₉P₂V₃(CH₃)₃W₁₂O₆₂ | " |
| 111 | Li₇HSi₂W₁₈Nb₆O₇₇ | " |
| 112 | Cs₉P₂V₃CH₃W₁₂O₆₂ | " |
| 113 | Cs₁₂P₂V₃W₁₂O₆₂ | " |
| 114 | K₄H₂PV₄W₈O₄₀ | " |
| 115 | Na₁₂P₄W₁₄O₅₈ | " |
| 116 | Na₁₄H₆P₆W₁₈O₇₉ | " |
| 117 | a-K₅(NbO₂)SiW₁₁O₃₉ | " |
| 118 | aO₂)SiW₁₁O₃₉ | " |
| 119 | [(CH₃)₃NH⁺)₅NbSiW₁₁O₄₀ | " |
| 120 | [(CH₃)₃NH⁺]₅TaSiW₁₁O₄₀ | " |
| 121 | K₆Nb₃PW₉O₄₀ | **Peroxo-Keggin-Struktur** |
| 122 | [(CH₃)₃NH⁺]₅(NbO₂)SiW₁₁O₃₉ | " |
| 123 | [(CH₃)₃NH⁺]₅(TaO₂)SiW₁₁O₃₉ | " |
| 124 | K₄(NbO₂)PW₁₁O₃₉ | " |
| 125 | K₇(NDO₂)P₂W₁₂O₆₁ | " |
| 126 | [(CH₃)₃NH⁺]₇(NbO₂)₃SiW₉O₃₇ | " |
| 127 | Cs₇(NbO₂)₃SiW₉O₃₇ | " |
| 128 | K₆(NbO₂)₃PW₉O₃₇ | " |
| 129 | Na₁₀(H₂W₁₂O₄₂) | " |
| 130 | K₄NbPW₁₁O₄₀ | " |
| 131 | [(CH₃)₃NH₊]₄NbPW₁₁O₄₀ | " |
| 132 | K₅NbSiW₁₁O₄₀ | " |
| 133 | K₅TaSiW₁₁O₄₀ | " |
| 134 | K₇NbP₂W₁₇O₆₂ | **Wells-Dawson-Struktur** |
| 135 | K₇(TiO₂)₂PW₁₀O₃₈ | " |
| 136 | K₇(TaO₂)₃SiW₉O₃₇ | " |
| 137 | K₇Ta₃SiW₉O₄₀ | " |
| 138 | K₆(TaO₂)₃PW₉O₃₇ | " |
| 139 | K₆Ta₃PW₉O₄₀ | " |
| 140 | K₈Co₂W₁₁O₃₉ | " |
| 141 | H₂[(CH₃)₄N⁺]4(C₂H₅Si)₂CoW₁₁O₄₀ | " |
| 142 | H₂[(CH₃)₄N⁺]₄(iso-C₄H₉Si)₂CoW₁₁O₄₀ | " |
| 143 | K₉Nb₃P₂W₁₅O₆₂ | " |
| 144 | K₉(Nbo₂)₃P₂W₁₅O₅₉ | " |
| 145 | K₁₂(NbO₂)₆P₂W₁₂O₅₆ | **Well-Dawson-Peroxostruktur** |
| 146 | K₁₂Nb₆P₂W₁₂O₆₂ | **Wells-Dawson-Struktur ff.** |
| 147 | a₂-K₁₀P₂W₁₇O₆₁ | **"** |
| 148 | K₆Fe(III)Nb₃P₂W₁₅O₆₂ | " |
| 149 | K₇Zn(II)Nb₃P₂W₁₅O₆₂ | " |
| 150 | (NH₄)₆(a-P₂W₁₈O₆₂).nH₂O | " |
| 151 | K₁₂[H₂P₂W₁₂O₄₈].24H₂O | " |
| 152 | K₂Na₁₅H₅[PtMo₆O₂₄].8H₂O | " |
| 153 | K₈[a₂-P₂W₁₇MoO₆₂].nH₂O | " |
| 154 | KHP₂V₃W₁₅O₆₂.34H₂O | " |
| 155 | K₆[P₂W₁₂Nb₆O₆₂].24H₂O | " |
| 156 | Na₆[V₁₀O₂₈].H₂O | " |
| 157 | (Guanidinium)₈H[PV₁₄O₆₂].3H₂O | " |
| 158 | K8H[PV14O62] | " |
| 159 | Na₇[MnV₁₃O₃₈].18H₂O | " |
| 160 | K₆[BW₁₁O₃₉Ga(OH)₂].13H₂O | " |
| 161 | K₇H[Nb₆O₁₉].13H₂O | " |
| 162 | [(CH₃)₄N⁺/Na⁺/K⁺]₄[Nb₂W₄O₁₉] | " |
| 163 | [((CH₃)₄N⁺]₉[P₂W₁₅Nb₃O₆₂] | " |
| 164 | [(CH₃)₄N⁺]₁₅[HP₄W₃₀Nb₆O₁₂₃].16H₂O | " |
| 165 | [Na/K]₆[Nb₄W₂O₁₉] | " |
| 166 | [(CH₃)₄N⁺/Na⁺/K⁺]5[_{Nb3W3O19]}.6H₂O | " |
| 167 | K₅[CpTiSiW₁₁O₃₉].12H₂O | " |
| 169 | b₂-K₈[SiW₁₁O₃₉].14H₂O | " |
| 170 | a-K₈[SiW₁₀O₃₆].12H₂O | " |
| 171 | Cs₇Na₂[PW₁₀O₃₇].8H₂O | " |
| 172 | Cs₆[P₂W₅O₂₃].7,5H₂O | " |
| 173 | g-Cs₇[PW₁₀O₃₆].7H₂O | " |
| 174 | K₅[SiNbW₁₁O₄₀].7H₂O | " |
| 175 | K₄[PNbW₁₁O₄₀].12H₂O | " |
| 176 | Na₆[Nb₄W₂O₁₉].13H₂O | " |
| 177 | K₆[Nb₄W₂O₁₉].7H₂O | " |
| 180 | K₄[V₂W₄O₁₉].3,5H₂O | " |
| 181 | Na₅[V₃W₃O₁₉].12H₂O | " |
| 182 | K₆[PV₃W₉O₄₀].14H₂O | " |
| 183 | Na₉[A-b-GeW₉O₃₄].8H₂O | " |
| 184 | Na₁₀[A-a-GeW₉O₃₄].9H₂O | " |
| 185 | K₇[BV₂W₁₀O₄₀].6H₂O | " |
| 186 | Na₅[CH₃Sn(Nb₆O₁₉)].10H₂O | " |
| 187 | Na₈[Pt(P(m-SO₃C₆H₅)₃)₃Cl].3H₂O | " |
| 188 | [(CH₃)₃NH⁺]₁₀(H)[Si (H)₃W₁₈O₆₈].10H₂O | " |
| 189 | K₇[A-a-GeNb₃W₉O₄₀].18H₂O | " |
| 190 | K₇[A-b-SiNb₃W₉O₄₀].20H₂O | " |
| 191 | [(CH₃)₃NH⁺]₉[A-a-HGe₂Nb₆W₁₈O₇₈ | " |
| 192 | K-(H)[A-a-Ge₂NbₑW₁₈O₇₇].18H₂O | " |
| 193 | K₈[A-b-Si₂Nb₆W₁₈O₇₇] | " |
| 194 | [(CH₃)₃NH⁺]₈[A-B-Si₂NbW₁₈O₇₇] | " |

a) vgl. US 6,020,369, TABLE 1, Spalten 3 bis 10;
b) Tierui Zhang, Shaoquin Liu, Dirk G. Kurth und Charl F. J. Faul, »Organized Nanostructured Complexes of Polyoxometalates and Surfactants that Exhibit Photoluminescence and Electrochromism, Advanced Functional Materials, 2009, 19, Seiten 642 bis 652;
   n Zahl, insbesondere ganze Zahl, von 1 bis 50.

Weitere Beispiele geeigneter POM sind aus dem amerikanischen Patent US 7,097,858 B2, Spalte 14, Zeile 56, bis Spalte 17, Zeile 19, sowie aus TABLE 8a, Spalte 22, Zeile 41, bis Spalte 23, Zeile 28, Verbindungen Nummer 1-53, und TABLE 8b, Spalte 23, Zeile 30, bis Spalte 25, Zeile 34, Verbindungen Nummer 1 bis 150, bekannt.

Ganz besonders bevorzugt werden
- Ammoniumheptamolybdat-Tetrahydrat {(NH₄)₆Mo₇O₂₄] · 4H₂O, CAS-Nr.13106-76-8 (wasserfrei), CAS-Nr. 12054-85-2 (Tetrahydrat), **AHMT},**
- Wolframatophosphorsäure-Hydrat {H₃[P(W₃O₁₀)₄] · xH₂O, CAS-Nr. 1343-93-7 (wasserfrei), CAS-Nr. 12067-99-1 (Hydrat), Wo-Pho},
- Molybdatophosphorsäure-Hydrat, {H₃P(Mo₃O₄₀)4] · xH2O, CAS-Nr.:12026-57-2 (wasserfrei), CAS-Nr. 51429-74-4 (Hydrat), Mo-Pho} und/oder
- Wolframatokieselsäure {H₄[Si(W₃O₁₀)₄] · xH₂O, CAS-Nr. 12027-43-9, WKS}
und/oder ihre Salze verwendet.

Die vorstehend im Detail beschriebenen POM zeichnen sich durch ihre thermische Stabilität aus und machen die resultierenden Wertprodukten bakterizid und viruzid. Insbesondere wirken sie gegen Mollicuten, speziell Mykoplasmen.

Weitere Beispiele für geeignete Zusatzstoffe sind nicht funktionalisierte oder mit Amin-, Hydroxyl- und/oder Carbonylgruppen funktionalisierte Graphene.

Weitere Beispiele für geeignete Zusatzstoffe sind reaktive Gase und Flüssigkeiten, die mit den entstehenden Wertprodukten (co)polyymerisieren können, wie Acetylen, Ethylen, Propylen, Isopren, Butadien und weitere einfach oder mehrfach funktionelle olefinisch ungesättigte Monomere, Monomere für die Polyaddition wie Diisocyanate, Monomere für die Polykondensation wie Carbonsäureanhydride, Carbonsäuren und Hydroxyverbindungen sowie Synthesegas.

Weitere Beispiele für geeignete Zusatzstoffe sind mittels aktinischer Strahlung angeregter Sauerstoff, wobei hier unter aktinischer Strahlung UV-Strahlung, Röntgenstrahlung und Elektronenstrahlung zu verstehen ist, organische und anorganische Peroxide wie die üblichen und bekannten thermischen Radikalinitiatoren und Peroxoschwefelsäure, Peroxodischwefelsäure, Peroxoessigsäure, Natriumperoxid und Bariumperoxid sowie Ozon.

Mithilfe des erfindungsgemäßen mechanochemischen Verfahrens lässt sich ein besonders breites Spektrum an Wertprodukten erzeugen. Unter Wertprodukten werden im Rahmen der vorliegenden Erfindung Materialien verstanden, die nicht down-recycelt, sondern up-recycelt sind oder, anders gesagt, die nicht minderwertiger als die Ausgangsprodukte sind, sondern höherwertiger. So können von persistenten organischen Schadstoffen (POP) und/oder anderen Organohalogenverbindungen freie
- Kunststoffe, in denen die Organohalogenverbindungen zumindest reduziert oder komplett entfernt sind, hergestellt werden, wie zum Beispiel vollständig dehalogeniertes PVC oder PVDC,
- Polymere, die Copolymere, Blockcopolymere, Pfropfmischpolymerisate, Kammpolymerisate und Polymerlegierungen aus ansonsten unverträglichen Polymeren, bilden,
- Polymere, mit einer modifizierten Oberfläche, die durch radikalische Reaktionen an den Enden der Polymeren deutlich stärker quervernetzt ist,
- Polymere mit einer diamantoiden Verstärkung,
- Polymere mit einer Grapheneinlage, die zu einer besonders hohen Stabilisierung führt,
- Polymer-Kompositmaterialien, mit den vorstehend beschriebenen Fasern, Nanopartikeln und Zusatzstoffen, die aufgrund der mechanochemischen Bearbeitung aktiviert werden und mit den Polymeren in besonders hochdisperser Einbettung eine besonders feste Bindung eingehen, die durch mechanische oder chemische Behandlung alleine nicht zu erzielen wäre und die Wertprodukte erheblich stabiler machen,
- Mikrokristalline und nanokristalline Cokristalle der Polymere mit den vorstehend beschriebenen Nanopartikeln und Mikropartikeln, die bei der mechanochemischen Behandlung durch Selbstorganisation aufgebaut werden,
- Polymer-Kompositmaterialien, Polymerlegierungen und mikrokristalline und nanokristalline Cokristalle die mit Fremdatomen dotiert sind, wie zum Beispiel Scandium, Yttrium, Lanthan, Lanthanide, Uran, Titan, Hafnium, Vanadium, Niob, Tantal, Chrom, Molybdän, Wolfram, Mangan, Rhenium, Eisen, Ruthenium, Osmium, Kobalt, Rhodium, Iridium, Nickel, Palladium, Platin, Kupfer, Silber, Gold, Zink, Cadmium, Quecksilber, Bor, Aluminium, Gallium, Indium, Thallium, Silizium, Germanium, Zinn, Blei, Stickstoff, Phosphor, Arsen, Antimon, Wismut, Sauerstoff, Schwefel, Selen und/oder Tellur; die betreffenden Wertprodukte sind wertvolle Katalysatoren und können mesoporöse Eigenschaften aufweisen,
- Copolymere mit Superabsorbern,
- Superabsorber durch Zugabe von Sauerstoffradikalen, Peroxiden und/oder Ozon die mit den Radikalen an den Endgruppen der Polymeren reagieren,
- MOFs, Rotaxane, Käfigverbindungen, Metallorganische-Gitterwerke und selbstorganisierende Systeme,
- mesoporöse Materialien mit unterschiedlichen Porengrößen, Porengrößenverteilungen, Vernetzungsgraden, mesh-Größen, hydrophoben, super, hydrophoben, hydrophilen, super hydrophilen und hydrophil-hydrophoben Polaritäten und/oder thermischen und elektrischen Leitfähigkeiten und/oder magnetischen Eigenschaften,
- Polymeradditive, die besonders homogen in den Wertprodukten Polymeren verteilt sind und neue anwendungstechnische Eigenschaften mit sich bringen wie eine Verstärkung gegen Druck, Scherkräfte und/oder Zugkräfte, Resistenz gegen Bewitterung, Strahlung und/oder Chemikalien, eine höhere Kreuzverknüpfung, eine geringere Löslichkeit, ein geringeres Schwellverhalten durch quer Verknüpfungen und/oder eine bessere Fähigkeit Wasser oder Lipide zu binden,
- sandgefüllte, insbesondere mit Wüstensand gefüllte, Komposite für Baumaterialien und
- topologische Materialien (vgl. Technology Review, November 2017, Seite 83).

Dem breiten Spektrum an Wertprodukten, die das erfindungsgemäße mechanochemische Verfahren liefert, entsprechen die zahlreichen Möglichkeiten, die Wertprodukte zu verwenden. So können sie als hochwertige polymere Werkstoffe, Polymeradditive, reversible und irreversible Absorbentien für Wasser oder Öle, für die Entsalzung von Meerwasser und von versalzten Böden, als Katalysatoren, als Elektrodenmaterial für Batterien, als Baumaterialien und für die Herstellung von Abschirmungen für elektrische und magnetische Felder verwendet werden.

Der wesentliche Vorteil dieser Wertprodukte ist, dass sie keine Quelle für persistente Schadstoffe (POP) und Organohalogenverbindungen mehr sind.

### Beispiele

### Beispiel 1: Die mechanochemische Herstellung eines hoch temperaturbeständigen, sterilisierbaren Kunststoffkomposits aus POP-kontaminierten Polymerabfällen

Ausgemusterte Formteile aus Polyetherketon (PEK) und Polyethersulfon (PES), denen noch Reste von Metall-Kunststoff-Klebstoffen anhafteten, wurden im Gewichtsverhältnis von 1:1 miteinander vermischt und in einem Shredder auf eine mittlere Teilchengröße von 100 µm zerkleinert. Der Anteil an groben Teilchen einer Teilchengröße >500 µm wurde nochmals geshreddert, bis auch sie die gewünschte mittlere Teilchengröße von 100 µm hatten.

2 kg des geshredderten PEK-PES-Gemischs wurden in einer entsprechend dimensionierten Kugelmühle, die zu 80 % ihres Volumens mit Wolframcarbid-Kugeln eines Durchmessers von 20 mm gefüllt war mit 0,1 g PCB (etwa 0,005 Gew.-%) durch 30-minütiges Mahlen bei Raumtemperatur kontaminiert. Dabei verringerte sich die mittlere Teilchengröße auf 1 µm.

Danach wurden 40 g (4 Gew.-%) Wolframatokieselsäure {H₄[Si(W₃O₁₀)₄] · xH₂O, CAS-Nr. 12027-43-9} zu der kontaminierten PEK-PES-Mischung hinzugegeben, wonach die resultierende Mischung erneut während 30 Minuten bei Raumtemperatur gemahlen wurde. Dabei verringerte sich die mittlere Teilchengröße weiter auf 500 nm. Anschließend wurde 30 g Butylamin und 50 g Tetraethylenglykoldimethylether während 5 Minuten durch Mahlen bei Raumtemperatur eingemischt. Die resultierende Mischung wurde mit 120 g Magnesiumsspäne während 3 Stunden bei Raumtemperatur gemahlen.

Das resultierende Wertprodukt wurde von den Wolframcarbid-Kugeln abgetrennt und mit Wasser von wasserlöslichen Bestandteilen (Magnesiumchlorid, Butylamin, Tetraethylenglykoldimethylether und Nebenprodukte) befreit. Bei dem Wertprodukt handelt es sich um eine pulverförmige thermoplastische PEK-PES-Polymerlegierung, in der die ansonsten unverträglichen Polymeren keine PEK- und PES-Domänen bildeten. Die mittlere Teilchengröße betrug 100 nm und der Gehalt an Wolframatokieselsäuren lag bei 4,2 Gew.-%. Durch die gaschromatische Messung mit Elektroneneinfangdetektor und Dekachlorbiphenyl als internem Standard wurde bestätigt, dass das PCB zu 99,7 % der Anfangsmenge abgebaut war.

Das resultierende Wertprodukt konnte thermoplastisch zu hochtemperaturbeständigen, schlagzähen, sterilisierbaren Formteilen, wie Griffe für chirurgische Geräte, verarbeitet werden. Diese Griffe waren auf Dauer vor der Kontamination mit Mollicuten, insbesondere mit Mykoplasmen, sicher.

### Beispiel 2: Die mechanochemische Herstellung eines organohalogen- und organobromfreien, mit Biokohle gefüllten Thermoplasten

Es wurden 2 kg geshredderte Teile einer zweischichtigen Aluminium-EPDM-Folie einer mittleren Teilchengröße von 500 nm, deren Polymeranteil 1,5 Gew.-% Dekabromdiphenylether (etwa 25 g als Flammschutzmittel enthielt, in einer entsprechend dimensionierten Kugelmühle, die zu 80 % ihres Volumens mit Wolframcarbid-Kugeln eines Durchmessers von 20 mm gefüllt war, mit 0,1 g PCB (etwa 0,005 Gew.-%) durch 30-minütiges Mahlen bei Raumtemperatur kontaminiert. Dabei verringerte sich die mittlere Teilchengröße auf 1 µm.

Die PCB-kontaminierten Teile wurden, bezogen auf den Polymeranteil, mit 10 Gew.-% Getreidespelzen durch einstündiges Mahlen bei Raumtemperatur vermischt. Dabei wurden die Getreidespelzen in Biokohle umgewandelt und die mittlere Teilchengröße des resultierenden Gemischs sank auf 600 nm.

Es wurde unter Argon separat eine Dispersion oder Lösung aus 30 g feinteiligem Natrium in 50 g Tris(hydroxyethyl)amin und 10 g Tetraethylenglykol hergestellt und unter Argon zur Kugelmühle hinzugegeben. Die resultierende Mischung wurde bei Raumtemperatur während 3 Stunden gemahlen. Das resultierende Produktgemisch wurde von den Wolframcarbid-Kugeln abgetrennt, und gegebenenfalls noch vorhandenes metallisches Natrium wurde mit Ethanol vorsichtig vernichtet. Anschließend wurde das Produktgemisch mit Wasser von den wasserlöslichen Verbindungen (Natriumchlorid, Natriumbromid, Aluminiumchlorid, Aluminiumbromid, Tris(hydroxyethyl)amin und Triethylenglycol) befreit und getrocknet.

Das resultierende getrocknete Wertprodukt war frei von Aluminium. Die in situ gebildete Biokohle war in dem EPDM homogen verteilt. Durch gaschromatische Messungen mit Elektroneneinfangdetektor und Dekachlorbiphenyl als internem Standard wurde bestätigt, dass das PCB zu 99,7 % und der Dekabromdiphenylether zu 99,9 % der jeweiligen Anfangsmenge abgebaut waren.

Das mit Biokohle hochgefüllte EPDM konnte thermoplastisch verarbeitet werden, wies eine hervorragende Elastizität auf und absorbierte Schadstoffe aus der Luft. Somit konnte das Wertprodukt mit Vorteil in Innenräumen verwendet werden.

### Beispiel 3: Die mechanochemische Herstellung eines mit Wüstensand gefüllten Polymerbetons mit besonders niedrigem Gehalt an polymeren Bindemitteln

10 kg Wüstensand von einer Sanddüne wurden in einer entsprechend dimensionierten Kugelmühle, die zu 80 % ihres Volumens mit Wolframcarbid-Kugeln eines Durchmessers von 20 mm gefüllt war, mit 0,5 g PCB (etwa 0,005 Gew.-%) durch einstündiges Mahlen bei Raumtemperatur kontaminiert. Dadurch erniedrigte sich die mittlere Teilchengröße des Wüstensands auf 500 µm. Eine Siebanalyse zeigte eine enge, monomodale Teilchengrößenverteilung. Unter dem Mikroskop zeigte sich eine Zerklüftung der Sandkörner. Zu dem gemahlenen Wüstensand wurden 0,5 kg geshredderte Polymerabfälle einer mittleren Teilchengröße von 1 mm zugesetzt. Die Polymerabfälle bestanden aus 0,2 kg Polyethylenterephthalat, 0,2 kg Polyepoxid und 0,1 kg Polyoxymethylen. Das resultierende Gemisch wurde während 30 Minuten gemahlen. Anschließend wurden unter trockenem Stickstoff 50 g der Graphiteinlagerungsverbindung C₈K zugesetzt und das resultierende Gemisch während 2 Stunden gemahlen.

Das resultierende graue Wertprodukt wurde von den Mahlkörpern getrennt und sein Chloridgehalt bestimmt. Es zeigte sich, dass nahezu 100 % des organisch gebundenen Chlors in anorganisches Chlorid umgewandelt waren. Für die weitere Verwendung war es nicht notwendig, die anorganischen Chloride abzutrennen. Das graue Wertprodukt war ein frei fließendes Pulver mit einer durch Siebanalyse bestimmten mittleren Teilchengröße von 400 µm. Es enthielt lediglich 5 Gew.-% an organischen Polymeren. Trotzdem konnte das Wertprodukt unter einem Druck von 5 bar bei einer Temperatur von 100 °C zu stabilen Formsteinen gepresst werden.

## Patentansprüche

1. Mechanochemisches Verfahren zur Herstellung von Wertprodukten, die von persistenten organischen Schadstoffen und anderen Organohalogenverbindungen frei sind, aus Abfällen von sortenreinen und nicht sortenreinen Kunststoffen und Kunststofflaminaten,
wobei die Abfälle aus der Gruppe bestehend aus
- Polyadditionsharzen
- Polymerlegierungen wie Styrol/Polyphenylenether, Polyamid/Polycarbonat, Ethylen-Propylen-Dien-Kautschuk (EPDM), Acrylnitrile-Butadien-StyrolCopolymerisate (ABS) oder Polyvinylchlorid/Polyethylen und
- Duroplasten
ausgewählt sind, **dadurch gekennzeichnet, dass**
(i) die Abfälle zerkleinert werden, sodass eine möglichst enge Teilchengrößenverteilung resultiert,
(ii) die zerkleinerten Abfälle in eine Mühle gefüllt werden, die Mahlkugeln enthält, und durch Mahlen weiter zerkleinert werden,
(iii) mindestens ein Dehalogenierungsmittel in einem bezüglich der vorhandenen Mengen an persistenten organischen Schadstoffen, sofern organohalogenhaltig, und/oder anderen Organohalogenverbindungen molaren Überschuss zugesetzt wird,
(iv) die Mischung aus gemahlenen zerkleinerten Abfällen und Dehalogenierungsmittel weiter vermahlt und die Mahlung nach einer vorgewählten Zeit beendet,
(v) die resultierenden von persistenten organischen Schadstoffen und anderen Organohalogenverbindungen freien Wertprodukte von den Mahlkugeln abtrennt und die entstandenen, halogenhaltigen, wasserlöslichen Produkte durch Waschen mit wässrigen Lösungsmitteln abtrennt und/oder die entstandenen, halogenhaltigen, wasserunlöslichen Produkte nicht auswäscht, sondern als Füllstoffe in den Wertprodukten belässt und
(vi) die gewaschenen Wertprodukte nach der Trocknung sowie die nicht gewaschenen Wertprodukte überprüft, ob sie noch persistente organische Schadstoffe und/oder andere Organohalogenverbindungen enthalten, wobei
(vii) vor und/oder nach dem Verfahrensschritt (iv) mindestens ein Zusatzstoff, ausgewählt aus der Gruppe, bestehend aus thermisch und/oder mit aktinischer Strahlung härtbaren Reaktiverdünnern, niedrig siedenden organischen Lösemitteln und hochsiedenden organischen Lösemitteln ("lange Lösemittel"), Wasser, UV-Absorbern, Lichtschutzmitteln, Radikalfänger, thermolabilen radikalischen Initiatoren, Photoinitiatoren und -coinitiatoren, Vernetzungsmitteln, wie sie in Einkomponentensystemen verwendet werden, Katalysatoren für die thermische Vernetzung, Entlüftungsmitteln, Slipadditiven, Polymerisationsinhibitoren, Entschäumern, Emulgatoren, Netz- und Dispergiermitteln und Tensiden, Haftvermittlern, Verlaufmitteln, filmbildenden Hilfsmitteln, Sag control agents (SCA), rheologiesteuernden Additiven (Verdicker), Flammschutzmitteln, Sikkativen, Trocknungsmitteln, Hautverhinderungsmitteln, Korrosionsinhibitoren, Wachsen, Mattierungsmitteln, Verstärkungsfasern, Nanopartikeln Mikropartikeln, Sande, Vorstufen organisch modifizierter Keramikmaterialien, Schichtsilikaten, Polyoxometallaten, inerten Gasen, gefrorenen Gasen, gefrorenen Flüssigkeiten und Flüssigkeiten und reaktiven Gasen und Flüssigkeiten, die mit den entstehenden und entstandenen Wertprodukten (co)polymerisieren, angeregter Sauerstoff, organischen und anorganische Peroxiden und Ozon,
zugesetzt wird.

2. Mechanochemisches Verfahren nach Anspruch 1, **dadurch gekennzeichnet, dass** der mindestens eine Zusatzstoff aus der Gruppe, bestehend aus Aktivkohlen, Biokohlen, pyrogenem Kohlenstoff, Polyoxometallaten und Sanden, ausgewählt wird.

3. Mechanochemisches Verfahren nach Anspruch 1 oder 2, **dadurch gekennzeichnet, dass** mindestens 99,5 % der Ausgangsmengen an persistenten organischen Schadstoffen und/oder anderen Organohalogenverbindungen eliminiert werden.

4. Mechanochemisches Verfahren nach einem der Ansprüche 1 bis 3, **dadurch gekennzeichnet, dass** die noch vorhandenen Mengen an persistenten organischen Schadstoffen und/oder anderen Organohalogenverbindungen unterhalb der Nachweisgrenze üblicher und bekannter Nachweismethoden liegt.

5. Mechanochemisches Verfahren nach einem der Ansprüche 1 bis 4, **dadurch gekennzeichnet, dass**
- mindestens ein reduzierendes Dehalogenierungsmittel, ausgewählt aus der Gruppe, bestehend aus Alkalimetallen, Erdalkalimetallen, Lösungen von Alkalimetallen und Erdalkalimetallen in flüssigem Ammoniak und flüssigen Aminen sowie anderen wasserähnlichen Lösungsmitteln, Zintl-Phasen, Graphiteinlagerungsverbindungen von Alkalimetallen salzartigen Hydriden, komplexen Hydriden, komplexen Übergangsmetallhydriden, Metallhydriden, Aluminium, Eisen, Zink, Lanthan und Lanthaniden sowie Actiniden,
- mindestens ein Oxychloride und Oxybromide bildendes Oxid, ausgewählt aus der Gruppe, bestehend aus wie Antimonoxid, Bismutoxid, Lanthanoxid, Yttriumoxid, Ceroxid, Praseodymoxid, Neodymoxid, Samariumoxid, Europiumoxid, Gadoliniumoxid, Terbiumoxid, Dysprosiumoxid, Holmiumoxid, Erbiumoxid, Thuliumoxid, Ytterbiumoxid und/oder Lutetiumoxid,
- mindestens ein Chloride und Bromide bildendes Metallhydroxid, ausgewählt aus der Gruppe, bestehend aus Lithium-, Natrium-, Kalium-, Rubidium-, Cäsium-, Magnesium-, Calcium-, Strontium-, Barium-, Zink-, Blei-, Nickel-, Kobalt-, Kupfer-, und Zinnhydroxyd sowie Eisenhydroxiden,
- mindestens ein Carbonat von Metallen, deren Chloride und Bromide leicht wasserlöslich sind, ausgewählt aus der Gruppe, bestehend aus Magnesit, Strontianit, Witherit, Dolomit, Aragonit, Kalzit, Vaterit, Zinkspat, Gaylussit, Natrit, Soda, Trona, Muschelkalk und Korallenkalk sowie synthetischem Lithiumcarbonat, Natriumbicarbonat, Kaliumcarbonat, Magnesiumcarbonat, Calciumcarbonat, Strontiumcarbonat und Bariumcarbonat,
- mindestens ein oxidierendes Dehalogenierungsmittel, ausgewählt aus der Gruppe, bestehend aus Wasserstoffperoxid mit Rhenium katalysiert, Oxydasen/Wasserstoffperoxid, Peroxidasen/Wasserstoffperoxid und Advanced Oxidation Processes (AOP, aktivierte Oxidationsverfahren) unter Verwendung von UV-Strahlung, Wasserstoffperoxid und/oder katalytische Nassoxidation durch die Bildung von Hydroxyl-Radikalen, oder
- mindestens eine Dehalogenase, ausgewählt aus der Gruppe, bestehend aus Alkylhalidasen, (S)-2-Halogencarbonsäure-Dehalogenasen, Haloacetat-Dehalogenasen, Haloalkan-Dehalogenasen, 4-Chlorbenzoat-Dehalogenasen, Atrazin-Chlorhydrolasen, 4-Chlorbenzoyl-Coenzym A-Dehalogenasen, (R)-2-Halogencarbonsäure-Dehalogenasen, 2-Halogencarbonsäure-Dehalogenasen (Konfiguration-invertierend) und 2-Halogencarbonsäure-Dehalogenasen (Konfiguration-erhaltend),
verwendet wird.

6. Mechanochemisches Verfahren nach einem der Ansprüche 1 bis 5, **dadurch gekennzeichnet, dass** die Wertprodukte
- Kunststoffe, in denen die persistenten organischen Schadstoffe und/oder Organohalogenverbindungen zumindest reduziert oder komplett entfernt sind,
- Polymere, die Copolymere, Blockcopolymere, Pfropfmischpolymerisate, Kammpolymerisate und Polymerlegierungen aus ansonsten unverträglichen Polymeren, bilden,
- Polymere, mit einer modifizierten Oberfläche, die durch radikalische Reaktionen an den Enden der Polymeren deutlich stärker quervernetzt ist,
- Polymere mit einer diamantoiden Verstärkung,
- Polymere mit einer Grapheneinlage, die zu einer besonders hohen Stabilisierung führt,
- Polymer-Kompositmaterialien, mit den vorstehend beschriebenen Fasern, Nanopartikeln und Zusatzstoffen, die aufgrund der mechanochemischen Bearbeitung aktiviert werden und mit den Polymeren in besonders hochdisperser Einbettung eine besonders feste Bindung eingehen, die durch mechanische oder chemische Behandlung alleine nicht zu erzielen wäre und die Wertprodukte erheblich stabiler machen,
- mikrokristalline und nanokristalline Cokristalle der Polymere mit den vorstehend beschriebenen Nanopartikeln und Mikropartikeln, die bei der mechanochemischen Behandlung durch Selbstorganisation aufgebaut werden,
- Polymer-Kompositmaterialien, Polymerlegierungen und mikrokristalline und nanokristalline Cokristalle die mit Fremdatomen, , Scandium, Yttrium, Lanthan, Lanthanide, Uran, Titan, Hafnium, Vanadium, Niob, Tantal, Chrom, Molybdän, Wolfram, Mangan, Rhenium, Eisen, Ruthenium, Osmium, Kobalt, Rhodium, Iridium, Nickel, Palladium, Platin, Kupfer, Silber, Gold, Zink, Cadmium, Quecksilber, Bor, Aluminium, Gallium, Indium, Thallium, Silizium, Germanium, Zinn, Blei, Stickstoff, Phosphor, Arsen, Antimon, Wismut, Sauerstoff, Schwefel, Selen und/oder Tellur, dotiert sind
- Copolymere mit Superabsorbern,
- Superabsorber durch Zugabe von Sauerstoffradikalen, Peroxiden und/oder Ozon die mit den Radikalen an den Endgruppen der Polymeren reagieren,
- MOFs, Rotaxane, Käfigverbindungen, metallorganische Gitterwerke und selbstorganisierende Systeme,
- mesoporöse Materialien mit unterschiedlichen Porengrößen, Porengrößenverteilungen, Vernetzungsgraden, mesh-Größen, hydrophoben, super, hydrophoben, hydrophilen, superhydrophilen und hydrophil-hydrophoben Polaritäten und/oder thermischen und elektrischen Leitfähigkeiten und/oder magnetischen Eigenschaften,
- Polymeradditive, die besonders homogen in den Wertprodukten Polymeren verteilt sind und neue anwendungstechnische Eigenschaften mit sich bringen wie eine Verstärkung gegen Druck, Scherkräfte und/oder Zugkräfte, Resistenz gegen Bewitterung, Strahlung und/oder Chemikalien, eine höhere Kreuzverknüpfung, eine geringere Löslichkeit, ein geringeres Schwellverhalten durch quer Verknüpfungen und/oder eine bessere Fähigkeit Wasser oder Lipide zu binden,
- topologische Materialien
oder
- sandgefüllte Komposite für Baumaterialien
sind.

7. Mechanochemisches Verfahren nach Anspruch 6, **dadurch gekennzeichnet, dass** die mit Sand gefüllten Komposite für Baumaterialien mit Wüstensand gefüllt sind.

## Claims

1. Mechanochemical process for the production of valuable products free from persistent organic pollutants and other organohalogen compounds from waste materials of plastics and plastic laminates which are pure in type and not pure in type,
wherein the waste materials are selected from the group consisting of
- polyaddition resins
- polymer alloys like styrene/polyphenylene ether, polyamide/polycarbonate, ethylene-propylene-diene-rubber (EPDM), acrylonitrile-butadiene-styrene-copolymers (ABS) or polyvinyl chloride/polyethylene and
- thermosets,
**characterised in that**
(i) the waste materials are comminuted so that a particle size distribution as narrow as possible results,
(ii) the comminuted waste materials are loaded into a mill containing milling balls and further comminuted by milling,
(iii) at least one dehalogenating agent is added in a molar excess with respect to the amounts of present persistent organic pollutants, if containing organohalogens, and/or other organohalogen compounds,
(iv) the mixture of milled comminuted waste materials and dehalogenating agent is milled further and the milling is ceased after a preselected time,
(v) the resulting valuable products free of persistent organic pollutants and other organohalogen compounds are separated from the milling balls and the resulting halogen-containing water-soluble products are separated by washing with aqueous solvents and/or the resulting halogen-containing water-insoluble products are not washed out but left as fillers in the valuable products; and
(vi) the washed valuable products after drying as well as the unwashed valuable products are checked whether they still contain persistent organic pollutants and/or other organohalogen compounds, wherein
(vii) before and/or after process step (iv), at least one additive selected from the group consisting of reactive diluents curable thermally and/or with actinic radiation, low-boiling organic solvents and high-boiling organic solvents ("long solvents"), water, UV absorbers, light stabilizers, radical scavengers, thermolabile radical initiators, photoinitiators and photo-coinitiators, crosslinking agents as used in one-component systems, catalysts for thermal crosslinking, deaerating agents, slip additives, polymerisation inhibitors, defoamers, emulsifiers, wetting and dispersing agents and surfactants, adhesion promoters, levelling agents, film forming aids, sag control agents (SCA), rheology controlling additives (thickeners), flame retardants, siccatives, drying agents, skin prevention agents, corrosion inhibitors, waxes, matting agents, reinforcing fibres, nanoparticles, microparticles, sands, precursors of organically modified ceramic materials, phyllosilicates, polyoxometalates, inert gases, frozen gases, frozen liquids and liquids and reactive gases and liquids which (co)polymerize with the resulting and formed valuable products, excited oxygen, organic and inorganic peroxides and ozone, is added.

2. Mechanochemical process according to claim 1, **characterized in that** the at least one additive is selected from the group consisting of activated carbons, biochars, pyrogenic carbon, polyoxometalates and sands.

3. Mechanochemical process according to claim 1 or 2, **characterized in that** at least 99.5% of the initial amounts of persistent organic pollutants and/or other organohalogen compounds are eliminated.

4. Mechanochemical process according to any one of claims 1 to 3, **characterised in that** the amounts of persistent organic pollutants and/or other organohalogen compounds still present are below the detection limit of conventional and known detection methods.

5. Mechanochemical process according to any one of claims 1 to 4, **characterized in that**
- at least one reducing dehalogenating agent selected from the group consisting of alkali metals, alkaline earth metals, solutions of alkali metals and alkaline earth metals in liquid ammonia and liquid amines as well as other water-like solvents, Zintl phases, graphite intercalation compounds of alkali metals salt-like hydrides, complex hydrides, complex transition metal hydrides, metal hydrides, aluminium, iron, zinc, lanthanum and lanthanides as well as actinides,
- at least one oxychloride and oxybromide forming oxide selected from the group consisting of such as antimony oxide, bismuth oxide, lanthanum oxide, yttrium oxide, cerium oxide, praseodymium oxide, neodymium oxide, samarium oxide, europium oxide, gadolinium oxide, terbium oxide, dysprosium oxide, holmium oxide, erbium oxide, thulium oxide, ytterbium oxide and/or lutetium oxide,
- at least one chloride- and bromide-forming metal hydroxide selected from the group consisting of lithium, sodium, potassium, rubidium, caesium, magnesium, calcium, strontium, barium, zinc, lead, nickel, cobalt, copper and tin hydroxides as well as iron hydroxides,
- at least one carbonate of metals whose chlorides and bromides are readily soluble in water, selected from the group consisting of magnesite, strontianite, witherite, dolomite, aragonite, calcite, vaterite, zinc spar, gaylussite, natrite, soda ash, trona, shell limestone and coral limestone, as well as synthetic lithium carbonate, sodium bicarbonate, potassium carbonate, magnesium carbonate, calcium carbonate, strontium carbonate and barium carbonate,
- at least one oxidising dehalogenating agent selected from the group consisting of hydrogen peroxide catalysed with rhenium, oxidases/hydrogen peroxide, peroxidases/hydrogen peroxide and advanced oxidation processes (AOP, activated oxidation processes) using UV radiation, hydrogen peroxide and/or catalytic wet oxidation by the formation of hydroxyl radicals, or
- at least one dehalogenase selected from the group consisting of alkyl halidases, (S)-2-halocarboxylic acid dehalogenases, haloacetate dehalogenases, haloalkane dehalogenases, 4-chlorobenzoate dehalogenases, atrazine chlorohydrolases, 4-chlorobenzoyl-coenzyme A dehalogenases, (R)-2-halogencarboxylic acid dehalogenases, 2-halogencarboxylic acid dehalogenases (configuration-inverting) and 2-halogencarboxylic acid dehalogenases (configuration-maintaining),
is used.

6. Mechanochemical process according to any one of claims 1 to 5, **characterized in that** the valuable products are
- polymers in which the persistent organic pollutants and/or organohalogen compounds are at least reduced or completely removed,
- polymers forming copolymers, block copolymers, graft copolymers, comb polymers, and polymer alloys of otherwise incompatible polymers,
- polymers having a modified surface which is significantly more crosslinked by radical reactions at the ends of the polymers,
- polymers with a diamantoid reinforcement,
- polymers with a graphene insertion, which leads to a particularly high stabilization,
- polymer composite materials, with the above-described fibres, nanoparticles and additives, which are activated as a result of the mechanochemical processing and form a particularly strong bond with the polymers in a particularly highly dispersed embedding, which could not be achieved by mechanical or chemical treatment alone and make the valuable products considerably more stable,
- microcrystalline and nanocrystalline co-crystals of the polymers with the nanoparticles and microparticles described above, which are built up by self-organisation during the mechanochemical treatment,
- polymer composites, polymer alloys and microcrystalline and nanocrystalline co-crystals which are doped with impurity atoms, scandium, yttrium, lanthanum, lanthanides, uranium, titanium, hafnium, vanadium, niobium, tantalum, chromium, molybdenum, tungsten, manganese, rhenium, iron, ruthenium, osmium, cobalt, rhodium, iridium, nickel, palladium, platinum, copper, silver, gold, zinc, cadmium, mercury, boron, aluminium, gallium, indium, thallium, silicon, germanium, tin, lead, nitrogen, phosphorus, arsenic, antimony, bismuth, oxygen, sulphur, selenium and/or tellurium.
- copolymers with superabsorbers,
- superabsorbers by addition of oxygen radicals, peroxides and/or ozone which react with the radicals at the end groups of the polymers,
- MOFs, rotaxanes, cage compounds, metal-organic lattices and self-organising systems,
- mesoporous materials with different pore sizes, pore size distributions, degrees of cross-linking, mesh sizes, hydrophobic, superhydrophobic, hydrophilic, superhydrophilic and hydrophilic-hydrophobic polarities and/or thermal and electrical conductivities and/or magnetic properties,
- polymer additives which are particularly homogeneously distributed in the valuable product polymers and bring with them new application properties such as reinforcement against pressure, shear forces and/or tensile forces, resistance to weathering, radiation and/or chemicals, a higher cross-linking, a lower solubility, a lower swelling behaviour due to cross-linking and/or a better ability to bind water or lipids,
- topological materials or
- sand-filled composites for building materials.

7. Mechanochemical process according to claim 6, **characterized in that** the sand-filled composites for building materials are filled with desert sand.

## Revendications

1. Procédé mécanochimique de production de produits valorisables qui sont exempts de polluants organiques persistants et d'autres composés organohalogénés, à partir de déchets de plastiques et de stratifiés plastiques monomatières et mixtes,
les déchets étant sélectionnés dans le groupe constitué par
- les résines de polyaddition
- les alliages polymères tels que le styrène/polyphénylène éther, le polyamide/polycarbonate, le caoutchouc éthylène-propylène-diène (EPDM), les copolymères acrylonitrile-butadiène-styrène (ABS) ou le polychlorure de vinyle/polyéthylène
et
- les thermodurcissables
**caractérisé en ce que**
(i) les déchets sont broyés de sorte qu'il en résulte une granulométrie la plus fine possible;
(ii) les déchets broyés sont introduits dans un broyeur qui contient des boulets de broyage, et sont broyés à nouveau;
(iii) au moins un agent de déshalogénation est ajouté en une quantité molaire excédentaire par rapport aux quantités présentes de polluants organiques persistants, à condition qu'ils contiennent des composés organohalogénés, et/ou autres composés organohalogénés,
(iv) le mélange de déchets broyés et déchiquetés et d'agent de déshalogénation est à nouveau broyé et le broyage est arrêté après une durée choisie auparavant,
(v) les produits valorisables obtenus qui sont exempts de polluants organiques persistants et d'autres composés organohalogénés, sont séparés des boulets de broyage et les produits halogénés hydrosolubles obtenus sont séparés par lavage avec des solvants aqueux, et/ou les produits halogénés insolubles dans l'eau obtenus ne sont pas éliminés par lavage, mais restent en tant que charges dans les produits valorisables, et
(vi) les produits valorisables lavés après séchage ainsi que les produits valorisables non lavés sont contrôlés pour vérifier s'ils contiennent encore des polluants organiques persistants et/ou d'autres composés organohalogénés, dans lequel
(vii) avant et/ou après l'étape (iv) du procédé, au moins un additif choisi dans le groupe constitué de diluants réactifs durcissables par voie thermique et/ou par rayonnement actinique, de solvants organiques à bas point d'ébullition et de solvants organiques à haut point d'ébullition («solvants longs»), d'eau, d'absorbeurs d'UV, d'agents stabilisants contre l''effet de la lumière, d'agents capteurs de radicaux, d'initiateurs radicaux thermolabiles, de photo-initiateurs et co-initiateurs, d'agents de réticulation tels qu'ils sont utilisés dans les systèmes monocomposants, de catalyseurs pour la réticulation thermique, d'agents de désaération, d'additifs glissants, d'inhibiteurs de polymérisation, d'antimousses, d'émulsifiants, d'agents mouillants et dispersants et de tensioactifs, de promoteurs d'adhérence, d'agents d'écoulement, d'agents filmogènes, d'agents de neutralisation d"affaissement (sag control agents (SCA)), d'additifs de contrôle de la rhéologie (épaississants), de retardateurs de flamme, de siccatifs, d'agents de séchage, d'agents anti-peau, d'inhibiteurs de corrosion, de cires, d'agents de matage, de fibres de renforcement, de nanoparticules, de microparticules, de sables, de précurseurs de matériaux céramiques organiquement modifiés, de phyllosilicates, de polyoxométalates, de gaz inertes, de gaz congelés, de liquides congelés et de liquides et de gaz réactifs et de liquides (co)polymérisables avec les produits valorisables qui sont produits et obtenus, d'oxygène excité, de peroxydes organiques et inorganiques et d'ozone
est ajouté.

2. Procédé mécanochimique selon la revendication 1, **caractérisé en ce que** ledit au moins un additif est choisi dans le groupe constitué par les charbons actifs, les biocharbons, le carbone pyrogéné, les polyoxométalates et les sables.

3. Procédé mécanochimique selon la revendication 1 ou 2, **caractérisé en ce qu'**au moins 99,5 % des quantités initiales de polluants organiques persistants et/ou d'autres composés organohalogénés sont éliminés.

4. Procédé mécanochimique selon l'une quelconque des revendications 1 à 3, **caractérisé en ce que** les quantités encore présentes de polluants organiques persistants et/ou d'autres composés organohalogénés sont inférieures à la limite de détection de méthodes de détection usuelles et connues.

5. Procédé mécanochimique selon l'une quelconque des revendications 1 à 4, **caractérisé en ce que**
- au moins un agent réducteur de déshalogénation choisi dans le groupe constitué par les métaux alcalins, les métaux alcalino-terreux, les solutions de métaux alcalins et alcalino-terreux dans l'ammoniac liquide et les amines liquides, ainsi que d'autres solvants proches de l'eau, les phases de Zintl, les composés d'intercalation graphiteux de métaux alcalins, les hydrures salins, les hydrures complexes, les hydrures complexes de métaux de transition, les hydrures métalliques, l'aluminium, le fer, le zinc, le lanthane et les lanthanides ainsi que les actinides;
- au moins un oxyde formant des oxychlorures et des oxybromures, choisi dans le groupe constitué par l'oxyde d'antimoine, l'oxyde de bismuth, l'oxyde de lanthane, l'oxyde d'yttrium, l'oxyde de cérium, l'oxyde de praséodyme, l'oxyde de néodyme, l'oxyde de samarium, l'oxyde d'europium, l'oxyde de gadolinium, l'oxyde de terbium, l'oxyde de dysprosium, l'oxyde d'holmium, l'oxyde d'erbium, l'oxyde de thulium, d'oxyde d'ytterbium et/ou l'oxyde de lutécium,
- au moins un hydroxyde métallique formant des chlorures et des bromures, choisi dans le groupe constitué par les hydroxydes de lithium, de sodium, de potassium, de rubidium, de césium, de magnésium, de calcium, de strontium, de baryum, de zinc, de plomb, de nickel, de cobalt, de cuivre et d'étain, ainsi que les hydroxydes de fer,
- au moins un carbonate de métaux dont les chlorures et les bromures sont facilement solubles dans l'eau, choisi dans le groupe constitué par la magnésite, la strontianite, la withérite, la dolomite, l'aragonite, la calcite, la vatérite, le spath de zinc, la gaylussite, la natrite, la soude, le trona, le calcaire coquillier et le calcaire corallien, ainsi que le carbonate de lithium synthétique, le bicarbonate de sodium, le carbonate de potassium, le carbonate de magnésium, le carbonate de calcium, le carbonate de strontium et le carbonate de baryum,
- au moins un agent de déshalogénation oxydant choisi dans le groupe constitué par le peroxyde d'hydrogène catalysé au rhénium, oxydases/peroxyde d'hydrogène, peroxydases/peroxyde d'hydrogène et procédés d'oxydation avancée (POA, procédés d'oxydation activée) en utilisant le rayonnement UV, le peroxyde d'hydrogène et/ou l'oxydation catalytique humide par formation de radicaux hydroxyles, ou
- au moins une déshalogénase choisie dans le groupe constitué par les alkylhalidases, les déshalogénases de l'acide (S)-2-halocarboxylique, les déshalogénases de l'haloacétate, les déshalogénases de l'haloalcane, les déshalogénases de la 4-chlorobenzoate, les chlorohydrolases de l'atrazine, les déshalogénases de la 4-chlorobenzoyl coenzyme A, les déshalogénases de l'acide (R)-2-halocarboxylique, les déshalogénases de l'acide 2-halocarboxylique (à inversion de configuration) et les déshalogénases de l'acide 2-halocarboxylique (à maintien de configuration)
est utilisé.

6. Procédé mécanochimique selon l'une quelconque des revendications 1 à 5, **caractérisé en ce que** les produits valorisables sont
- des matières plastiques dans lesquelles les polluants organiques persistants et/ou les composés organohalogénés sont au moins réduits ou complètement éliminés,
- des polymères formant des copolymères, des copolymères en bloc, des copolymères greffés, des polymères en peigne et des alliages de polymères à partir de polymères autrement incompatibles,
- des polymères à surface modifiée qui est sensiblement plus fortement réticulée par des réactions radicalaires aux extrémités des polymères,
- des polymères à renfort diamantoïde,
- des polymères avec un insert de graphène qui conduit à une stabilisation particulièrement élevée,
- des matériaux composites polymères contenant les fibres, les nanoparticules et les additifs décrits ci-dessus, qui sont activés en raison du traitement mécanochimique et forment une liaison particulièrement forte avec les polymères dans un enrobage particulièrement dispersé, ce qui ne pourrait être obtenu par un traitement mécanique ou chimique seul, et confèrent aux produits valorisables une stabilité considérablement accrue,
- des cocristaux microcristallins et nanocristallins de polymères contenant les nanoparticules et les microparticules décrites ci-dessus, qui sont formés par auto-organisation lors du traitement mécanochimique,
- des matériaux composites polymères, alliages polymères et cocristaux microcristallins et nanocristallins qui sont dopés avec des atomes étrangers, scandium, yttrium, lanthane, lanthanides, uranium, titane, hafnium, vanadium, niobium, tantale, chrome, molybdène, tungstène, manganèse, rhénium, fer, ruthénium, osmium, cobalt, rhodium, iridium, nickel, palladium, platine, cuivre, argent, or, zinc, cadmium, mercure, bore, aluminium, gallium, indium, thallium, silicium, germanium, étain, plomb, azote, phosphore, arsenic, antimoine, bismuth, oxygène, soufre, sélénium et/ou tellure,
- des copolymères avec des superabsorbants,
- des superabsorbants par ajout de radicaux oxygène, de peroxydes et/ou d'ozone qui réagissent avec les radicaux sur les groupes terminaux des polymères,
- des MOF, des rotaxanes, des composés cages, des réseaux organométalliques et des systèmes auto-organisateurs,
- des matériaux mésoporeux présentant différent(e)s tailles de pores, distributions granulométriques, degrés de réticulation, tailles de maille, polarités hydrophobes, superhydrophobes, hydrophiles, superhydrophiles et hydrophile-hydrophobe, et/ou conductivités thermiques et électriques, et/ou propriétés magnétiques,
- des additifs polymères qui sont distribués de manière particulièrement homogène dans les produits valorisables que sont les polymères et fournissent de nouvelles propriétés relatives à la technique d'application, telles qu'un renforcement contre la pression, les forces de cisaillement et/ou les forces de traction, la résistance aux intempéries, aux radiations et/ou aux produits chimiques, une liaison croisée plus élevée, une solubilité plus faible, un gonflement plus faible dû à la liaison transversale, et/ou une meilleure capacité à lier l'eau ou les lipides,
- des matériaux topologiques
ou
- des composites chargés de sable pour des matériaux de construction.

7. Procédé mécanochimique selon la revendication 6, **caractérisé en ce que** les composites chargés de sable pour des matériaux de construction sont chargés de sable du désert.
